(19) Europäisches Patentamt / European Patent Office / Office européen des brevets

(11) **EP 3 294 067 B1**

(12) **FASCICULE DE BREVET EUROPEEN**

(45) Date de publication et mention
de la délivrance du brevet:
**28.08.2024  Bulletin 2024/35**

(21) Numéro de dépôt: **16724862.4**

(22) Date de dépôt: **11.05.2016**

(51) Classification Internationale des Brevets (IPC):
**A23L 11/00** *(2021.01)*  **A23L 13/40** *(2023.01)*
**A23L 29/206** *(2016.01)*  **A23J 3/14** *(2006.01)*
**A23J 1/14** *(2006.01)*

(52) Classification Coopérative des Brevets (CPC):
**A23L 13/422; A23J 1/14; A23J 3/14; A23L 11/05;
A23L 13/426; A23L 29/206**

(86) Numéro de dépôt international:
**PCT/EP2016/060579**

(87) Numéro de publication internationale:
**WO 2016/180888 (17.11.2016 Gazette 2016/46)**

(54) **PROCEDE DE PREPARATION D'UN EXTRAIT DE POIS**

VERFAHREN ZUR HERSTELLUNG EINES ERBSENEXTRAKTS

METHOD FOR PRODUCING A PEA EXTRACT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.05.2015  BE 201505300**

(43) Date de publication de la demande:
**21.03.2018  Bulletin 2018/12**

(73) Titulaire: **Cosucra Groupe Warcoing S.A.
7740 Warcoing (BE)**

(72) Inventeurs:
 • **MARZEC, Véronique
  97430 Le Tampon (FR)**
 • **BOURGEOIS, Audrey
  51150 Tours sur Marne (FR)**
 • **LEBESGUE, Julie
  59310 Mouchin (FR)**
 • **MANSY, Frédéric
  7022 Hyon (BE)**
 • **BOSLY, Eric
  7540 Rumillies (BE)**
 • **GRAMAIN, Anthony
  59158 Mortagne du Nord (FR)**
 • **DESCAMPS, Mary
  7531 Havinnes (BE)**

(74) Mandataire: **De Clercq & Partners
Edgard Gevaertdreef 10a
9830 Sint-Martens-Latem (BE)**

(56) Documents cités:
**EP-A1- 1 400 537      EP-A2- 0 251 163
WO-A1-2015/071498   FR-A1- 2 889 416
FR-A1- 2 889 417      FR-A1- 2 976 945
US-A- 4 677 065       US-A1- 2011 274 797**

 • MEUSER F ET AL: "YIELD OF STARCH AND
 BY-PRODUCTS IN THE PROCESSING OF
 DIFFERENT VARIETIES OF WRINKLED PEAS ON
 A PILOT SCALE", CEREAL CHEMISTRY, AACC
 INTERNATIONAL INC, US, vol. 74, no. 4, 1 January
 1997 (1997-01-01), pages 364 - 370, XP001149013,
 ISSN: 0009-0352
 • "CHAPTER 4: Fermentation of Grain Legumes,
 Seeds and Nuts in Latin America and the
 Caribbean ED - Deshpande; S S", 1 January 2000,
 FERMENTED GRAIN LEGUMES, SEEDS AND
 NUTS: A GLOBAL PERSPECTIVE (BOOK
 SERIES: FAO AGRICULTURAL SERVICES
 BULLETIN), FOOD AND AGRICULTURE
 ORGANIZATION OF THE UNITED NATIONS, IT,
 PAGE(S) 99 - 105,107, ISBN: 92-5-104444-9,
 XP009177319

- **CAMACHO L ET AL: "Mejoramieto nutricional de legumbres de consumo habitual fermentado por cultivos del grano Lactobacilus", ALIMENTOS, SANTIAGO, CL, vol. 16, 1 January 1991 (1991-01-01), pages 5 - 11, XP009177313, ISSN: 0716-0968**
- **SCHINDLER SABRINA ET AL: "Improvement of the Aroma of Pea (Pisum sativum) Protein Extracts by Lactic Acid Fermentation", FOOD BIOTECHNOLOGY, DEKKER, NEW YORK, NY, USA, vol. 26, no. 1, 1 January 2012 (2012-01-01), pages 58 - 74, XP009177299, ISSN: 0890-5436, DOI: 10.1080/08905436.2011.645939**
- **KHATTAB R Y ET AL: "Nutritional quality of legume seeds as affected by some physical treatments, Part 1: Protein quality evaluation", LWT- FOOD SCIENCE AND TECHNOLOGY, ACADEMIC PRESS, UNITED KINGDOM, vol. 42, no. 6, 1 July 2009 (2009-07-01), pages 1107 - 1112, XP026040578, ISSN: 0023-6438, [retrieved on 20090214], DOI: 10.1016/J.LWT.2009.02.008**

**Description**

**DOMAINE DE L'INVENTION**

La présente invention concerne des procédés de séparation et de purification des différents composés du pois. En particulier, la présente invention concerne la préparation d'un extrait de pois comprenant des fibres. L'invention concerne en outre un extrait de pois comprenant des fibres pouvant être obtenu à l'aide des procédés susmentionnés, ainsi que les produits destinés à l'alimentation humaine ou animale contenant un extrait de pois comprenant des fibres. L'invention a également pour objet l'utilisation de l'extrait de pois comprenant des fibres dans l'industrie alimentaire humaine ou animale.

**CONTEXTE DE L'INVENTION**

Le pois est une espèce de plante annuelle de la famille des légumineuses avec une croissance rapide. Les plantations de pois sont très répandues dans l'Europe du nord. Le pois *(Pisum sativum)* est connu depuis des siècles comme un légume sain et fait partie d'une alimentation équilibrée grâce à la pauvre quantité de lipides et à sa haute teneur en protéines, amidon et fibres.

La fibre de pois s'utilise en mélange dans l'industrie de la viande, du poisson et des produits végétariens en tant que produit texturant ou pour ses propriétés de fibres alimentaires.

Pour séparer les fibres végétales des autres produits du pois, de nombreuses étapes de traitement sont nécessaires comme des étapes d'extraction, de fractionnement et de purification. La pureté et surtout les propriétés physico-chimiques de la fibre de pois, telles que la rétention en eau, la rétention en huile, la couleur, le goût, la densité et la force de gel, vont varier en fonction du traitement utilisé. Toutes les manipulations préalables à l'obtention de l'extrait de pois comprenant des fibres, disponible sous une forme plus ou moins pure, ont un fort impact sur sa qualité. Par exemple, le pois contient une certaine quantité d'amidon. Cet amidon reste associé plus aux moins aux fibres végétales selon le procédé utilisé. Les propriétés physico-chimiques de l'extrait de pois comprenant des fibres vont dépendre entre autres de cette quantité d'amidon présent dans l'extrait. Par ailleurs, la teneur en matière sèche va également influencer ces propriétés.

Il existe très peu de méthodes industrielles décrivant la séparation des fibres végétales du pois.

La fibre de pois étant considérée comme un sous-produit jusqu'à maintenant, peu de recherches sur le procédé ont été effectuées. Il existe un réel besoin de trouver un procédé d'extraction des fibres de pois innovant et adapté à l'extraction de ces fibres.

EP0 251 163 A2 décrit un procédé de préparation d'un produit comprenant des fibres et aussi le produit comprenant des fibres.

Dès lors, l'un des objets de la présente invention est de surmonter ou d'améliorer au moins un des désavantages de l'art antérieur, ou de fournir une alternative utile.

**RÉSUMÉ DE L'INVENTION**

Selon un premier aspect, la présente invention concerne un procédé de préparation d'un extrait de pois comprenant des fibres. Le procédé de préparation d'un extrait de pois comprenant des fibres comprend les étapes suivantes :

(a) mettre en contact des pois décortiqués avec une solution aqueuse afin de former une composition aqueuse comprenant des pois ;
(b) laisser hydrater les pois dans ladite composition aqueuse pendant au moins 30 minutes et au plus 15 heures ;
(c) broyer lesdits pois pour obtenir de ce fait des pois broyés ;
(d) fractionner lesdits pois broyés afin d'obtenir au moins un extrait de pois comprenant des fibres,

caractérisé en que l'étape (a) précède l'étape (b), qui elle-même précède l'étape (c), qui elle-même précède l'étape (d) et en ce que l'extrait de pois comprenant des fibres a un ratio pondéral fibres/amidon d'au moins 30/70 et d'au plus 85/15, préférentiellement un ratio pondéral fibres/amidon d'au moins 40/60 et d'au plus 70/30.

Selon la présente invention, la préparation d'un extrait de pois comprenant des fibres implique une hydratation des pois avant de les broyer. De préférence les pois sont broyés en phase humide. Selon un mode de réalisation, après l'étape (b) et avant l'étape (c), les pois sont égouttés puis mis en contact avec une solution aqueuse. Selon un mode de réalisation, pendant ou après le broyage, les fibres de pois sont séparées et purifiées.

Selon un deuxième aspect, la présente invention concerne un extrait de pois comprenant des fibres qui peut être obtenu ou est obtenu à l'aide du procédé selon le premier aspect de l'invention.

Selon un troisième aspect, la présente invention concerne une composition comestible de préférence destiné à l'alimentation humaine ou animale, comprenant un extrait de pois comprenant des fibres selon le deuxième aspect de l'invention ou un extrait de pois comprenant des fibres obtenu à l'aide du procédé selon le premier aspect de l'invention.

Selon un quatrième aspect, la présente invention concerne l'utilisation de l'extrait de pois comprenant des fibres selon le deuxième aspect de l'invention, ou de l'extrait de pois comprenant des fibres obtenu à l'aide du procédé selon le premier aspect de l'invention dans des produits destinés à l'alimentation humaine ou animale, de préférence, dans des produits restructurés à base de viande, de volailles, de poissons et/ou végétales comme le jambon, les burgers, les boulettes, les nuggets et les cordons bleu, les saucisses et saucissons de porc et/ou de poulet et/ou de poisson, les pâtés à base de viande et/ou de poisson et/ou végétales.

Il existe de nombreuses fibres végétales (carottes, blé, soja, bambou, ...) mais les fibres de pois de la présente invention possèdent une combinaison unique de caractéristiques physico-chimiques. En effet, les présents inventeurs ont constaté avec surprise que l'hydratation des pois (*Pisum sativum*) avant le broyage a un effet bénéfique sur plusieurs paramètres physicochimiques.

Lorsque des pois décortiqués sont hydratés avant d'être broyés selon le procédé de l'invention, l'extrait de pois comprenant des fibres a une meilleure rétention en eau comparé à une rétention en eau mesurée sur un extrait de pois comprenant des fibres obtenu à partir de pois décortiqués broyés à sec et ensuite hydratés.

De plus, le temps d'hydratation est important. Une simple mise en contact du pois avec une solution aqueuse ne suffit pas pour obtenir une réelle hydratation et avoir les caractéristiques mentionnées ci-dessus.

Par ailleurs, l'extrait de pois comprenant des fibres issu des pois décortiqués puis hydratés selon le procédé de l'invention a une meilleure rétention en eau que ce même extrait de pois issu des pois non décortiqués avant l'hydratation.

L'extrait de pois comprenant des fibres obtenu selon le procédé de l'invention a également une rétention en huile et une force de gel excellentes pour des applications dans des produits destinés à l'alimentation humaine ou animale, de préférence, dans des produits restructurés à base de viande, de volailles, de poissons et/ou végétales. En effet, l'extrait de pois comprenant des fibres est hautement fonctionnel et rentable. Elle aide à réduire les pertes à la cuisson et à améliorer les rendements de différentes préparations à base de viande. Elle améliore la texture de formage des produits restructurés tels que les hamburgers, les nuggets, tout en donnant plus de juteux au produit fini. Neutre en couleur et en goût, elle est sans allergène principal et peut être une alternative fonctionnelle aux protéines.

Les revendications indépendantes et dépendantes définissent les caractéristiques particulières et préférées de l'invention. Les caractéristiques des revendications dépendantes peuvent être combinées aux caractéristiques des revendications indépendantes ou à d'autres revendications dépendantes le cas échéant. Les revendications jointes sont également explicitement incluses par référence dans la présente description.

## BREVE DESCRIPTION DES FIGURES

La figure 1 représente schématiquement un processus d'extraction selon un mode de réalisation de l'invention.

La figure 2 représente schématiquement un processus d'extraction selon le mode de réalisation de l'exemple 2.

La figure 3 représente schématiquement un processus d'extraction selon le mode de réalisation de l'exemple 3.

La figure 4 représente schématiquement un processus d'extraction selon le mode de réalisation de l'exemple 4.

## DESCRIPTION DETAILLEE DE L'INVENTION

Avant de décrire le procédé de la présente invention, il convient de comprendre que cette invention ne se limite pas aux procédés particuliers, composants, produits ou combinaisons décrits, ces procédés, composants, produits ou combinaisons pouvant, bien entendu, varier. Il est aussi entendu que la terminologie utilisée ici ne saurait être considéré comme restrictive, étant donné que le champ d'application de la présente invention n'aura de limite que les revendications jointes.

Telles qu'utilisées ici, les formes singulières « un », « une » et « le », « la » incluent les références singulières et plurielles sauf si le contexte indique clairement le contraire.

Les termes « comprenant », « comprend » et « composé de » tels qu'utilisés ici sont synonymes de « incluant », « inclue » ou « contenant », « contient », et sont inclusifs ou ouverts et n'excluent pas les membres, éléments ou étapes de procédé supplémentaires non évoqués. Il ne faut pas oublier que les termes « comprenant », « comprend » et « composé de » tels qu'utilisés ici comprennent les termes « constitué de », « consiste à » et « consiste en », ainsi que les termes « consistant essentiellement en », « consiste essentiellement à » et « consiste essentiellement en ».

L'évocation de plages de valeur numériques par leurs points extrêmes inclut tous les nombres et fractions intégrés dans les plages respectives, ainsi que les points extrêmes récités.

Le terme « environ » ou « approximativement » tel qu'utilisé ici quand appliqué à une valeur mesurable telle qu'un paramètre, une quantité, une durée temporelle, et autres similaires, signifie qu'il y a un degré de variation de $\pm$ 20 % ou moins, de préférence de $\pm$ 10 % ou moins, plus préférentiellement de $\pm$ 5 % ou moins, et encore plus préférentiellement de $\pm 1$ % ou moins par rapport à la valeur spécifiée, dans la mesure où ces variations sont appropriées pour la réalisation de la présente invention. Il est entendu que la valeur à laquelle le qualificatif « environ » ou « approximativement » fait référence est elle-même également spécifiquement et de préférence, décrite.

Alors que les termes « un ou plusieurs » ou « au moins un », tel que un ou plusieurs ou au moins un membre(s) d'un groupe de membres, est clair en tant que tel, au moyen d'une démonstration par l'exemple, le terme inclut entre autres une référence à l'un quelconque desdits membres, ou à au moins deux quelconques desdits membres, comme par exemple, $\geq 3$, $\geq 4$, $\geq 5$, $\geq 6$ ou $\geq 7$ etc. desdits membres, et jusqu'à tous lesdits membres.

Toutes les références citées dans la présente description sont incorporées ici par référence dans leur intégralité. En particulier, les enseignements de toutes les références mentionnées expressément ici sont incorporés par référence.

À moins qu'il ne soient définis autrement, tous les termes utilisés dans la description de l'invention, y compris les termes techniques et scientifiques, ont la signification communément comprise par toute personne versée dans l'art dont relève l'invention. En complément d'information, des définitions des termes sont incluses pour mieux appréhender l'enseignement de la présente invention.

Dans les paragraphes suivants, différents aspects de l'invention sont définis plus en détail. Chaque aspect ainsi défini peut être combiné avec un ou d'autres aspects quelconques sauf indication claire du contraire. En particulier, toute caractéristique indiquée comme étant préférée ou avantageuse peut être combinée avec une ou d'autres caractéristiques indiquées comme étant préférées ou avantageuses.

Toute référence dans cette description à « un mode de réalisation » signifie qu'une fonction, structure ou caractéristique particulière décrite relativement au mode de réalisation est incluse dans au moins un mode de réalisation de la présente invention. Ainsi, les occurrences de la phrase « dans un mode de réalisation » en divers endroits de cette description ne font pas toutes nécessairement référence au même mode de réalisation, mais peuvent. Par ailleurs, les fonctions, structures ou caractéristiques particulières peuvent être combinées de toute manière appropriée, comme cela apparaitrait évident à l'homme du métier à la lecture de cette description, dans un ou plusieurs modes de réalisation. Par ailleurs, alors que certains modes de réalisation décrits ici comprennent certaines mais pas d'autres caractéristiques incluses dans d'autres modes de réalisation, les combinaisons de caractéristiques des différents modes de réalisation relèvent du champ d'application de l'invention, et forment différents modes de réalisation, comme le comprendrait l'homme du métier. Par exemple, dans les revendications jointes, l'un quelconque des modes de réalisation revendiqués peut être utilisé dans n'importe quelle combinaison.

Dans la description détaillée suivante de l'invention, il est fait référence aux figures annexées qui font partie intégrante de l'invention, et dans lesquelles sont représentés, à titre d'illustration uniquement, les modes de réalisation spécifiques dans lesquels l'invention peut être pratiquée. Il est entendu que d'autres modes de réalisation peuvent être utilisés et des modifications structurales ou logiques peuvent être apportées sans sortir du champ d'application de la présente invention. La description détaillée suivante ne doit donc pas être considérée comme limitative, et le champ d'application de la présente invention est défini par les revendications jointes.

La présent invention est définié par les revendications 1-17.

La présente invention est représentée en particulier par l'un quelconque ou une quelconque combinaison d'un ou plusieurs des aspects et modes de réalisation ci-dessous et les indications numérotées de 1 à 84, avec la condition qu'ils sont dans les limites des revendications.

1. Un procédé de préparation d'un extrait de pois comprenant des fibres, le procédé comprenant les étapes suivantes :

(a) mettre en contact des pois décortiqués avec une solution aqueuse afin de former une composition aqueuse comprenant des pois ;
(b) laisser hydrater les pois dans ladite composition aqueuse pendant au moins 30 minutes et au plus 15 heures ;
(c) broyer lesdits pois pour obtenir de ce fait des pois broyés ; et
(d) fractionner lesdits pois broyés afin d'obtenir au moins un extrait de pois comprenant des fibres,

caractérisé en que l'étape (a) précède l'étape (b), qui elle-même précède l'étape (c), qui elle-même précède l'étape (d) et en ce que l'extrait de pois comprenant des fibres a un ratio pondéral fibres/amidon d'au moins 30/70 et d'au plus 85/15, préférentiellement un ratio pondéral fibres/amidon d'au moins 40/60 et d'au plus 70/30.

2. Le procédé selon l'indication 1, dans lequel l'étape (a) précède l'étape (b), qui elle-même précède l'étape (c), qui elle-même précède l'étape (d).

3. Le procédé selon l'indication 1 ou 2, dans lequel au moins une étape de séchage (e) dudit extrait de pois comprenant des fibres est mise en oeuvre.

4. Le procédé selon l'une quelconque des indications 1 à 3, dans lequel le fractionnement desdits pois broyés dans l'étape (d) comprend la soumission desdits pois broyés à au moins une étape de séparation par centrifugation et/ou filtration.

5. Le procédé selon l'une quelconque des indications 1 à 4, dans lequel l'étape de fractionnement (d) peut être divisée en au moins deux étapes de fractionnement (d1) et (d2).

6. Le procédé selon l'une quelconque des indications 1 à 5, dans lequel l'étape de fractionnement (d) comprend au moins une étape (d1), dans lequel le fractionnement desdits pois broyés dans l'étape (d1) comprend la soumission desdits pois broyés à au moins une étape de décantation, de filtration et/ou de séparation par centrifugation afin d'obtenir une fraction enrichie en fibres.

7. Le procédé selon l'une quelconque des indications 1 à 6, dans lequel l'étape de fractionnement (d) peut être divisée en au moins deux étapes de fractionnement (d1) et (d2), et l'étape de fractionnement (d2) comprend au moins une étape de filtration de la fraction enrichie en fibres obtenue à l'étape (d1), plus particulièrement une étape de tamisage afin d'obtenir un extrait de pois comprenant des fibres.

8. Le procédé selon l'une quelconque des indications 1 à 7, dans lequel, pendant l'étape (b), les pois dans ladite composition aqueuse sont hydratés pendant au moins 1 heure, de préférence pendant au moins 1,5 heure, de préférence pendant au moins 3 heures, encore plus préférentiellement pendant au moins 6 heures.

9. Le procédé selon l'une quelconque des indications 1 à 8, dans lequel, pendant l'étape (b), les pois dans ladite composition aqueuse sont hydratés à une température d'au moins 0 °C.

10. Le procédé selon l'une quelconque des indications 1 à 9, dans lequel ladite composition aqueuse comprenant les pois durant l'étape (b) est soumise à au moins une fermentation.

11. Le procédé selon l'une quelconque des indications 1 à 10, dans lequel l'étape de fractionnement (d) comprend au moins une étape (d1), dans lequel le fractionnement desdits pois broyés dans l'étape (d1) comprend l'ajustement du pH des pois broyés à un pH d'au moins 6.

12. L'extrait de pois comprenant des fibres pouvant être obtenu à l'aide du procédé selon l'une quelconque des indications 1 à 11.

13. L'extrait de pois comprenant des fibres pouvant être obtenu à l'aide du procédé selon l'une quelconque des indications 3 à 11.

14. Extrait de pois comprenant des fibres caractérisé en ce qu'il comprend :

- un ratio pondéral fibres/amidon d'au moins 30/70 et d'au plus 85/15, préférentiellement un ratio pondéral fibres de pois/amidon d'au moins 40/60 et d'au plus 70/30 ;

- une quantité de fibres d'au moins 35 % et d'au plus 80 % en poids sur la base de la matière sèche dosées par la méthode AOAC-985.29, préférentiellement une quantité de fibres d'au moins 40 % et d'au plus 55 % en poids sur la base de la matière sèche dosées par la méthode AOAC-985.29 ;

- une teneur en matière sèche d'au moins 80 % et d'au plus 95 % sur la base du poids total de l'extrait, préférentiellement une teneur en matière sèche d'au moins 86 et d'au plus 94% sur la base du poids total de l'extrait, plus préférentiellement d'au moins 88 et d'au plus 92% sur la base du poids total de l'extrait ; et

- un taux de protéines inférieur à 5% sur la base de la matière sèche ; et

- en ce qu'il a une rétention en eau d'au moins 9 g d'eau/g de matière sèche et d'au plus 19 g d'eau/g de matière sèche ; préférentiellement une rétention en eau d'au moins 9 g d'eau/g de matière sèche et d'au plus 17 g d'eau/g de matière sèche ; et plus préférentiellement une rétention en eau d'au moins 9 g d'eau/g de matière sèche et d'au plus 15 g d'eau/g de matière sèche, et encore plus préférentiellement une rétention en eau d'au moins 9 g d'eau/g de matière sèche et d'au plus 13 g d'eau/g de matière sèche.

15. Extrait de pois comprenant des fibres selon l'indication 14, caractérisé en ce qu'il comprend :

- une taille de particule D50 < 400 $\mu$m, mesuré par granulométrie par voie sèche ;

- une taille de particule D90 < 700 $\mu$m, mesuré par granulométrie par voie sèche ; et en ce qu'il a

- une rétention en huile d'au moins 2,5 g d'huile/g de matière sèche et d'au plus 5,0 g d'huile/g de matière sèche, préférentiellement une rétention en huile d'au moins 2,8 g d'huile/g de matière sèche et d'au plus 3.2 g d'huile/g de matière sèche ; et

- une force de gel après traitement thermique d'au moins 400 g et d'au plus 900 g, préférentiellement une force de gel après traitement thermique d'au moins 400 et d'au plus 600 g.

16. Extrait broyé de pois comprenant des fibres caractérisé en ce qu'il comprend :

- une taille de particule D50 < 200 $\mu$m, mesuré par granulométrie par voie sèche ;

- une taille de particule D90 < 400 $\mu$m, mesuré par granulométrie par voie sèche ;

- un ratio pondéral fibres/amidon d'au moins 30/70 et d'au plus 85/15, préférentiellement un ratio pondéral fibres/amidon d'au moins 40/60 et d'au plus 70/30 ;

- une quantité de fibres d'au moins 35 % et d'au plus 80 % en poids sur la base de la matière sèche dosées par la méthode AOAC-985.29, préférentiellement une quantité de fibres d'au moins 40 % et d'au plus 65 % en poids sur la base de la matière sèche dosées par la méthode AOAC-985.29 ;

- une teneur en matière sèche d'au moins 80 % et d'au plus 95 % sur la base du poids total de l'extrait ; préférentiellement une teneur en matière sèche d'au moins 86 et d'au plus 94% sur la base du poids total de l'extrait, plus préférentiellement d'au moins 88 et d'au plus 92% sur la base du poids total de l'extrait ; et

- en ce qu'il a une rétention en eau d'au moins 7 g d'eau/g de matière sèche et d'au plus 17 g d'eau/g de matière sèche, préférentiellement une rétention en eau d'au moins 7 g d'eau/g de matière sèche et d'au plus 15 g d'eau/g de matière sèche, plus préférentiellement une rétention en eau d'au moins 7 g d'eau/g de matière sèche et d'au plus 13 g d'eau/g de matière sèche, encore plus préférentiellement une rétention en eau d'au moins 7 g d'eau/g de matière sèche et d'au plus 11 g d'eau/g de matière sèche, encore plus préférentiellement une rétention en eau d'au moins 9 g d'eau/g de matière sèche et d'au plus 11 g d'eau/g de matière sèche.

17. Extrait broyé de pois comprenant des fibres selon l'indication 16, caractérisé en ce qu'il comprend

- un taux de protéines inférieur à 5% sur la base de la matière sèche ;

- et qu'il a une rétention en huile d'au moins 1,5 g d'huile/g de matière sèche et d'au plus 5,0 g d'huile/g de matière sèche, préférentiellement une rétention en huile d'au moins 2,0 g d'huile/g de matière sèche et d'au plus 3.0 g d'huile/g de matière sèche ; et

- une force de gel après traitement thermique d'au moins 250 g et d'au plus 900 g, préférentiellement une force de gel après traitement thermique d'au moins 300 et d'au plus 400 g.

18. Une composition comestible, de préférence un produit destiné à l'alimentation humaine ou animale, comprenant l'extrait de pois comprenant des fibres selon l'une quelconques des indications 12 à 17.

19. L'utilisation de l'extrait de pois comprenant des fibres selon l'une quelconques des indications 12 à 17 dans des produits destinés à l'alimentation humaine ou animale, de préférence, des produits restructurés à base de viande, de volailles, de poissons ou végétales, des saucisses et saucissons de porc et/ou de poulet et/ou poisson, des pâtés à base de viande/poisson ou végétariens.

20. Le procédé selon l'une quelconque des indications 1 à 11, dans lequel ladite solution aqueuse de l'étape (a) est de l'eau.

21. Le procédé selon l'une quelconque des indications 1 à 11, 20, dans lequel les pois de l'étape (a) sont des pois secs, de préférence des pois ayant une teneur en matière sèche d'au moins 80 % et d'au plus 95 % sur la base du poids total des pois secs.

22. Le procédé selon l'une quelconque des indications 1 à 11, 20 à 21, dans lequel la quantité de pois qui est ajoutée à la solution aqueuse dans l'étape (a) pour reconstituer la composition aqueuse comprenant des pois est d'au moins 150 et d'au plus 500 kg de pois par $m^3$ de composition aqueuse comprenant des pois.

23. Le procédé selon l'une quelconque des indications 1 à 11, 20 à 22, dans lequel l'étape (b) comprend la fermentation desdits pois en présence de bactéries lactiques, de préférence en présence d'une ou plusieurs espèces de lactobacilles.

24. Le procédé selon l'une quelconque des indications 1 à 11, 20 à 23, dans lequel l'étape (b) comprend la fermentation desdits pois en présence de bactéries lactiques, dans lequel lesdites bactéries lactiques sont choisies dans le groupe comprenant : *Lactobacillus, Leuconostoc, Pediococcus, Streptococcus, Aerococcus, Carnobacterium, Enterococcus, Oenococcus, Sporolactobacillus, Tetragenococcus, Vagococcus,* et *Weisella,* et leurs combinaisons.

25. Le procédé selon l'une quelconque des indications 1 à 11, 20 à 24, dans lequel l'étape (b) comprend la fermentation desdits pois en présence de bactéries lactiques choisies dans le groupe comprenant : *Lactobacillus fermentum, Lactobacillus crispatus, Lactobacillus panis, Lactobacillus mucosae, Lactobacillus pontis, Lactobacillus acidophilus, Lactobacillus plantarum, Lactobacillus helveticus, Lactobacillus buchneri, Lactobacillus delbrueckii* et *Lactobacillus casei* et leurs mélanges.

26. Le procédé selon l'une quelconque des indications 1 à 11, 20 à 25, dans lequel l'étape (b) comprend la fermentation desdits pois en présence de bactéries lactiques, dans lequel les bactéries lactiques sont choisies dans le groupe comprenant : *Lactobacillus fermentum, Lactobacillus crispatus, Lactobacillus panis, Lactobacillus mucosae, Lactobacillus pontis,* et leurs mélanges.

27. Le procédé selon l'une quelconque des indications 1 à 11, 20 à 26, dans lequel l'étape (b) comprend la fermentation desdits pois en présence de bactéries lactiques, dans lequel lesdites bactéries lactiques sont *Lactobacillus fermentum,* ou *Lactobacillus crispatus.*

28. Le procédé selon l'une quelconque des indications 1 à 11, 20 à 27, dans lequel l'étape (b) comprend la fermentation desdits pois, dans lequel ladite fermentation est une fermentation anaérobique.

29. Le procédé selon l'une quelconque des indications 1 à 11, 20 à 28, dans lequel lesdits pois de l'étape (b) sont soumis à une fermentation jusqu'à ce que le pH desdits pois soit d'au plus 5,5, de préférence d'au plus 5,0, préférentiellement jusqu'à ce que le pH desdits pois soit d'au moins pH 3,5 et d'au plus pH 5, mesuré à température ambiante sur 1 g desdits pois qui ont été broyés puis mis en suspension dans 9 g d'eau.

30. Le procédé selon l'une quelconque des indications 1 à 11, 20 à 29, dans lequel lesdits pois de l'étape (b) sont soumis à une fermentation jusqu'à ce que le pH desdits pois soit réduit d'au moins 1 unité de pH, de préférence d'au moins 1,5 unité de pH, mesuré à température ambiante sur 1 g desdits pois qui ont été broyés puis mis en suspension dans 9 g d'eau.

31. Le procédé selon l'une quelconque des indications 1 à 11, 20 à 30, dans lequel lesdits pois de l'étape (b) sont soumis à une fermentation en présence d'au moins $10^2$ ufc à au plus $10^{10}$ ufc de bactéries lactiques par ml de ladite composition aqueuse comprenant des pois.

32. Le procédé selon l'une quelconque des indications 1 à 11, 20 à 31, dans lequel à la fin de l'étape (b) lesdits pois ont une acidité d'au moins 25 et d'au plus 250 mEq OH⁻ par gramme de pois.

33. Le procédé selon l'une quelconque des indications 1 à 11, 20 à 32, dans lequel le broyage à l'étape (c) est effectué en voie humide.

34. Le procédé selon l'une quelconque des indications 1 à 11, 20 à 33, dans lequel après l'étape (b) et avant l'étape (c), les pois sont égouttés puis mis en contact avec une solution aqueuse.

35. Le procédé selon l'indication 34, dans lequel ladite solution aqueuse est de l'eau.

36. Le procédé selon l'une quelconque des indications 1 à 11, 20 à 35, dans lequel lesdits pois après l'étape (b) et avant l'étape (c) ont une teneur en matière sèche d'au moins 35 % et d'au plus 70 % sur la base du poids total des pois, de préférence d'au moins 40 % et d'au plus 50 %.

37. Le procédé selon l'une quelconque des indications 1 à 11, 20 à 36, dans lequel avant, pendant et/ou après l'étape de broyage (c) une solution aqueuse est ajoutée, de préférence de l'eau, de préférence de façon à obtenir une composition aqueuse comprenant des pois broyés, ladite composition comprenant au moins 15 % et au plus 35 % de matière sèche sur la base du poids total de la composition, de préférence de 15 % à 35 % de matière sèche sur la base du poids total de la composition, de 18 % à 33 %, par exemple de 20 % à 30 % de matière sèche sur la base du poids total de la composition, comme par exemple au moins 21 %, par exemple au moins 22 %, par exemple au moins 23 %, par exemple au moins 24 %, par exemple au moins 25 %, au moins 26 %, au moins 27 %, au moins 28 %, au moins 29 % de matière sèche sur la base du poids total de la composition, par exemple au plus 30 % de matière sèche sur la base du poids total de la composition, au plus 31 %, au plus 32 %, au plus 33 % au plus 34 % de matière sèche sur la base du poids total de la composition.

38. Le procédé selon l'une quelconque des indications 1 à 11, 20 à 37, dans lequel l'étape de fractionnement (d) comprend au moins une étape (d1), dans lequel le fractionnement desdits pois broyés dans l'étape (d1) comprend l'ajustement du pH des pois broyés à un pH d'au moins 6, de préférence d'au moins 7, de manière préférée à un pH d'au moins 8 et d'au plus 9. Cet ajustement du pH peut être réalisé pendant l'étape de broyage (c). Cet ajustement du pH peut être réalisé à l'aide de n'importe quelle base appropriée, telle que l'hydroxyde de sodium, l'hydroxyde de potassium, l'hydroxyde de calcium. De préférence, cet ajustement du pH est réalisé sur une composition aqueuse comprenant des pois broyés ayant une teneur en matière sèche d'au plus 45 %, de préférence d'au plus 40 %, de préférence d'au plus 35 %, de préférence d'au plus 30 %, de préférence d'au plus 25 %. Dans un mode de réalisation, la teneur en matière sèche des pois broyés est ajustée à la teneur en matière sèche susmentionnée en ajoutant de l'eau en conséquence.

39. Le procédé selon l'une quelconque des indications 1 à 11, 20 à 38, dans lequel l'étape de fractionnement (d) comprend au moins une étape (d1), dans lequel le fractionnement desdits pois broyés dans l'étape (d1) comprend l'étape de soumission desdits pois broyés à au moins une étape de décantation, de préférence au moins une étape de décantation par centrifugation, dans lesquels les culots de décantation comprennent une fraction enrichie en fibres.

40. Le procédé selon l'une quelconque des indications 1 à 11, 20 à 38, dans lequel l'étape de fractionnement (d) comprend au moins une étape de soumission desdits pois broyés à au moins une étape de filtration, dans laquelle le gâteau comprend un extrait de pois comprenant des fibres.

41. Le procédé selon l'une quelconque des indications 1 à 11, 20 à 38, dans lequel l'étape de fractionnement (d) comprend au moins une étape (d1), dans lequel le fractionnement desdits pois broyés dans l'étape (d1) comprend l'étape de soumission desdits pois broyés à au moins une étape de séparation par hydrocyclones, dans laquelle la sousverse comprend une fraction enrichie en fibres.

42. Le procédé selon l'une quelconque des indications 1 à 11, 20 à 39, dans lequel l'étape de fractionnement (d) comprend au moins une étape (d1), dans lequel le fractionnement desdits pois broyés dans l'étape (d1) comprend l'étape de soumission desdits pois broyés à au moins une étape de décantation, de préférence à au moins une étape de décantation par centrifugation afin d'obtenir des culots, et la soumission de ces culots obtenus à au moins une étape de filtration (d2).

43. Le procédé selon l'une quelconque des indications 1 à 11, 20 à 42, dans lequel l'étape de fractionnement (d) comprend au moins une étape (d1), dans lequel le fractionnement desdits pois broyés dans l'étape (d1) comprend l'étape de soumission desdits pois broyés à au moins une étape de séparation par hydrocyclones, afin d'obtenir des sousverses, et la soumission de ces sousverses à au moins une étape de décantation par centrifugation (d2).

44. Le procédé selon l'une quelconque des indications 1 à 11, 20 à 43, dans lequel l'étape de fractionnement (d) comprend au moins une étape (d1), dans lequel la fraction enrichie en fibres obtenue à l'étape (d1) comprend aussi de l'amidon de pois.

45. Le procédé selon l'une quelconque des indications 1 à 11, 20 à 44, dans lequel l'étape de fractionnement (d) comprend au moins une étape (d1), dans lequel la fraction enrichie en fibres obtenue à l'étape (d1) comprend une teneur en matière sèche d'au moins 35% et d'au plus 55% sur la base du poids total de la fraction, préférentiellement d'au moins 40% et d'au plus 50% sur la base du poids total de la fraction.

46. Le procédé selon l'une quelconque des indications 1 à 11, 20 à 45, dans lequel l'étape de fractionnement (d) comprend au moins une étape (d1), dans lequel la fraction enrichie en fibres obtenue à l'étape (d1) comprend sur la base de la matière sèche, au moins 50% d'amidon, en poids, et au plus 90 % d'amidon, en poids, préférentiellement d'au moins 60% et d'au plus 80%, en poids, sur la base de la matière sèche.

47. Le procédé selon l'une quelconque des indications 1 à 11, 20 à 46, dans lequel l'étape de fractionnement (d) peut être divisée en au moins deux étapes de fractionnement (d1) et (d2), et l'étape (d2) comprend la soumission de ladite fraction enrichie en fibres à au moins une étape de séparation, suivie(s) d'au moins une étape de concentration, préférentiellement une étape de concentration par passage dans une presse ou dans une décanteuse, plus préférentiellement une étape de concentration par passage dans une presse.

48. Le procédé selon l'une quelconque des indications 1 à 11, 20 à 47, dans lequel les fibres contenues dans l'extrait de pois comprenant des fibres comprennent de la pectine.

49. Le procédé selon l'une quelconque des indications 1 à 11, 20 à 48, dans lequel les fibres contenues dans l'extrait de pois comprenant des fibres comprennent de l'hémicellulose.

50. Le procédé selon l'une quelconque des indications 1 à 11, 20 à 49, dans lequel les fibres contenues dans l'extrait de pois comprenant des fibres comprennent de la cellulose.

51. Le procédé selon l'une quelconque des indications 1 à 11, 20 à 50, dans lequel les fibres contenues dans l'extrait de pois comprenant des fibres comprennent de la lignine.

52. Le procédé selon l'une quelconque des indications 1 à 11, 20 à 51, dans lequel 90 % des particules de l'extrait de pois comprenant des fibres ont une taille < 700 $\mu$m, mesuré par granulométrie par voie humide.

53. Le procédé selon l'une quelconque des indications 1 à 11, 20 à 52, dans lequel 50 % des particules de l'extrait de pois comprenant des fibres ont une taille < 450 $\mu$m, mesuré par granulométrie par voie humide.

54. Le procédé selon l'une quelconque des indications 1 à 11, 20 à 53, dans lequel l'extrait de pois comprenant des fibres comprend sur la base de la matière sèche, au moins 10% d'amidon, en poids, et au plus 60 % d'amidon, en poids, préférentiellement au moins 20% et au plus 50% d'amidon, en poids, sur la base de la matière sèche.

55. Le procédé selon l'une quelconque des indications 1 à 11, 20 à 54, dans lequel l'extrait de pois comprenant des fibres a un ratio pondéral fibres/amidon d'au moins 30/70 et d'au plus 85/15, préférentiellement un ratio pondéral fibres/amidon d'au moins 40/60 et d'au plus 70/30.

56. Le procédé selon l'une quelconque des indications 1 à 11, 20 à 55, dans lequel l'extrait de pois comprenant des fibres a une rétention en eau d'au moins 5 g d'eau/g de matière sèche et d'au plus 21 g d'eau/g de matière sèche, préférentiellement d'au moins 7 g d'eau/g de matière sèche et d'au plus 17 g d'eau/g de matière sèche, plus préférentiellement d'au moins 9 g d'eau/g de matière sèche et d'au plus 15 g d'eau/g de matière sèche.

57. Le procédé selon l'une quelconque des indications 1 à 11, 20 à 56, dans lequel l'extrait de pois comprenant des fibres a une teneur en protéines inférieures à 5% sur base de la matière sèche.

58. Le procédé selon l'une quelconque des indications 3 à 11, 20 à 57, dans lequel au moins une étape de séchage (e) dudit extrait de pois comprenant des fibres est mise en oeuvre, ladite au moins une étape de séchage s'effectuant sur un sécheur par entrainement, de préférence sur un sécheur flash, sur un sécheur whirl flash et/ou sur un sécheur à lit d'air fluidisé.

59. Le procédé selon l'une quelconque des indications 3 à 11, 20 à 58, dans lequel au moins une étape de séchage (e) dudit extrait de pois comprenant des fibres est mise en oeuvre, et dans lequel ledit extrait de pois comprenant des fibres obtenu après l'étape de séchage (e) a une teneur en matière sèche d'au plus 95% sur la base du poids total de la composition et au moins 80%.

60. Le procédé selon l'une quelconque des indications 3 à 11, 20 à 59, dans lequel au moins une étape de séchage (e) dudit extrait de pois comprenant des fibres est mise en oeuvre, et dans lequel ledit extrait de pois comprenant des fibres obtenu après l'étape de séchage (e) comprend sur la base de la matière sèche, au plus 90 % de fibres, en poids, préférentiellement au plus 80 % de fibres, en poids, dosées par la méthode AOAC-985.29 et au moins 35 % de fibres, en poids, plus préférentiellement au moins 40 % de fibres, en poids, dosées par la méthode AOAC-985.29.

61. Le procédé selon l'une quelconque des indications 1 à 11, 20 à 60, dans lequel au moins une étape de séchage (e) dudit extrait de pois comprenant des fibres est mise en oeuvre, et dans lequel l'extrait de pois comprenant des fibres obtenu après l'étape de séchage (e) comprend sur la base de la matière sèche, au moins 10% d'amidon, en poids, et au plus 60 % d'amidon, en poids, préférentiellement d'au moins 20% et d'au plus 50%, en poids, sur la base de la matière sèche.

62. Le procédé selon l'une quelconque des indications 3 à 11, 20 à 61, dans lequel au moins une étape de séchage (e) dudit extrait de pois comprenant des fibres est mise en oeuvre, et dans lequel l'extrait de pois comprenant des fibres obtenu après l'étape de séchage (e) a un ratio pondéral fibres/amidon d'au moins 40/60 et d'au plus 85/15, préférentiellement a un ratio pondéral fibres/amidon d'au moins 50/50 et d'au plus 70/30.

63. Le procédé selon l'une quelconque des indications 3 à 11, 20 à 62, dans lequel au moins une étape de séchage (e) dudit extrait de pois comprenant des fibres est mise en oeuvre, et dans lequel 50 % des particules de l'extrait de pois comprenant des fibres obtenu après l'étape de séchage (e) ont une taille < 400 $\mu$m, mesuré par granulométrie par voie sèche, de préférence une taille < 300 $\mu$m, mesuré par granulométrie par voie sèche.

64. Le procédé selon l'une quelconque des indications 3 à 11, 20 à 63, dans lequel au moins une étape de séchage (e) dudit extrait de pois comprenant des fibres est mise en oeuvre, dans lequel 90 % des particules de l'extrait de pois comprenant des fibres obtenu après l'étape de séchage (e) ont une taille < 700 $\mu$m, mesuré par granulométrie par voie sèche, de préférence une taille < 600 $\mu$m, mesuré par granulométrie par voie sèche, encore plus préférentiellement une taille < 500 $\mu$m, mesuré par granulométrie par voie sèche.

65. Le procédé selon l'une quelconque des indications 3 à 11, 20 à 64, dans lequel au moins une étape de séchage (e) dudit extrait de pois comprenant des fibres est mise en oeuvre, et dans lequel ledit extrait de pois comprenant des fibres obtenu après l'étape de séchage (e) a une rétention en eau d'au moins 5 g d'eau/g de matière sèche et d'au plus 20 g d'eau/g de matière sèche, préférentiellement d'au moins 6 g d'eau/g de matière sèche et d'au plus 16 g d'eau/g de matière sèche, plus préférentiellement d'au moins 8 g d'eau/g de matière sèche et d'au plus 14 g d'eau/g de matière sèche.

66. Le procédé selon l'une quelconque des indications 3 à 11, 20 à 65, dans lequel au moins une étape de séchage (e) dudit extrait de pois comprenant des fibres est mise en oeuvre, et dans lequel l'extrait de pois comprenant des fibres obtenu après l'étape de séchage (e) a une rétention en huile d'au moins 2,5 g d'huile/g de matière sèche et d'au plus 5,0 g d'huile/g de matière sèche, préférentiellement d'au moins 2,7 g d'huile/g de matière sèche et d'au plus 3,4 g d'huile/g de matière sèche.

67. Le procédé selon l'une quelconque des indications 3 à 11, 20 à 66, dans lequel au moins une étape de séchage (e) dudit extrait de pois comprenant des fibres est mise en oeuvre, et dans lequel l'extrait de pois comprenant des fibre obtenu après l'étape de séchage (e) a une force de gel après traitement thermique d'au moins 400 g et d'au plus 900 g, préférentiellement d'au moins 450 g et d'au plus 500 g.

68. Le procédé selon l'une quelconque des indications 3 à 11, 20 à 67, dans lequel au moins une étape de séchage (e) dudit extrait de pois comprenant des fibres est mise en oeuvre, et dans lequel l'extrait de pois comprenant des fibre obtenu après l'étape de séchage (e) a une teneur en protéines inférieure à 5% sur base de la matière sèche.

69. Le procédé selon l'une quelconque des indications 1 à 11, 20 à 68, dans lequel un deuxième broyage peut avoir lieu après l'étape (d), plus préférentiellement après l'étape (e).

70. Le procédé selon l'indication 68, dans lequel l'extrait de pois comprenant des fibres comprend sur la base de la matière sèche, au moins 35% et au plus 90 % de fibres, en poids, préférentiellement au moins 40% et au plus 80 % de fibres, en poids, dosées par la méthode AOAC-985.29.

71. Le procédé selon l'une quelconques des indications 69 à 70, dans lequel l'extrait de pois comprenant des fibres a un ratio pondéral fibres/amidon d'au moins 40/60 et d'au plus 85/15, préférentiellement a un ratio pondéral fibres/amidon d'au moins 50/50 et d'au plus 70/30.

72. Le procédé selon l'une quelconque des indications 69 à 71, dans lequel l'extrait de pois comprenant des fibres comprend sur la base de la matière sèche, au moins 10% d'amidon, en poids, et au plus 60 % d'amidon, en poids, préférentiellement d'au moins 20% et d'au plus 50%, en poids, sur la base de la matière sèche.

73. Le procédé selon l'une quelconque des indications 69 à 72, dans lequel 50 % des particules de l'extrait de pois comprenant des fibres ont une taille < 200 $\mu$m, mesuré par granulométrie par voie sèche, de préférence une taille < 100 $\mu$m, mesuré par granulométrie par voie sèche.

74. Le procédé selon l'une quelconque des indications 69 à 73, dans lequel 90 % des particules de l'extrait de pois comprenant des fibres ont une taille < 400 $\mu$m, mesuré par granulométrie par voie sèche, de préférence une taille < 300 $\mu$m, mesuré par granulométrie par voie sèche.

75. Le procédé selon l'une quelconque des indications 69 à 74, dans lequel ledit extrait de pois comprenant des fibres a une rétention en eau d'au moins 5 g d'eau/g de matière sèche et d'au plus 20 g d'eau/g de matière sèche, préférentiellement d'au moins 5 g d'eau/g de matière sèche et d'au plus 17 g d'eau/g de matière sèche, plus préférentiellement d'au moins 6 g d'eau d'eau/g de matière sèche et d'au plus 15 g d'eau/g de matière sèche.

76. Le procédé selon l'une quelconque des indications 69 à 75, dans lequel l'extrait de pois comprenant des fibres a une rétention en huile d'au moins 1,5 g d'huile/g de matière sèche et d'au plus 5,0 g d'huile/g de matière sèche, préférentiellement d'au moins 2,0 g d'huile/g de matière sèche et d'au plus 2,5 g d'huile/g de matière sèche.

77. Le procédé selon l'une quelconque des indications 69 à 76, dans lequel l'extrait de pois comprenant des fibres a une force de gel après traitement thermique d'au moins 250 g et d'au plus 900 g, préférentiellement d'au moins 300 g et d'au plus 500 g.

78. Le procédé selon l'une quelconque des indications 69 à 77, dans lequel l'extrait de pois comprenant des fibre a une teneur en protéines inférieure à 5% sur base de la matière sèche.

79. Le procédé selon l'une quelconque des indications 1 à 11, 20 à 78, comprenant les étapes suivantes :

(a) mettre en contact les pois décortiqués avec une solution aqueuse afin de former une composition aqueuse comprenant des pois ;

(b) laisser hydrater les pois dans ladite composition aqueuse pendant au moins 30 minutes et au plus 15 heures ;

(c) broyer lesdits pois pour obtenir de ce fait des pois broyés ;

(d1) fractionner lesdits pois broyés afin d'obtenir au moins une fraction enrichie en fibres ; et

(d2) fractionner ladite fraction enrichie en fibres afin d'obtenir un extrait de pois comprenant des fibres.

80. Le procédé selon l'une quelconque des indications 1 à 11, 20 à 79, comprenant les étapes suivantes :

(a) mettre en contact les pois décortiqués avec une solution aqueuse afin de former une composition aqueuse comprenant des pois ;

(b) laisser hydrater les pois dans ladite composition aqueuse pendant au moins 30 minutes et au plus 15 heures ;

(c) broyer lesdits pois pour obtenir de ce fait des pois broyés ;

(d) fractionner lesdits pois broyés afin d'obtenir au moins un extrait de pois comprenant des fibres ; et

(e) sécher ledit extrait de pois comprenant des fibres, optionnellement broyer ledit extrait de pois avant ou après l'étape (e).

81. Le procédé selon l'une quelconque des indications 1 à 11, 20 à 80 comprenant les étapes suivantes :

(a) mettre en contact les pois décortiqués avec une solution aqueuse afin de former une composition aqueuse comprenant des pois ;

(b) laisser hydrater les pois dans ladite composition aqueuse pendant au moins 30 minutes et au plus 15 heures ;

(c) broyer lesdits pois pour obtenir de ce fait des pois broyés ;

(d1) fractionner lesdits pois broyés afin d'obtenir au moins une fraction enrichie en fibres ;

(d2) fractionner ladite fraction enrichie en fibres afin d'obtenir un extrait de pois comprenant des fibres ; et

(e) sécher ledit extrait de pois comprenant des fibres, optionnellement broyer ledit extrait de pois avant ou après l'étape (e).

82. Le procédé selon l'une quelconque des indications 1 à 11, 20 à 81 comprenant les étapes suivantes :

(a) mettre en contact les pois décortiqués avec une solution aqueuse afin de former une composition aqueuse comprenant des pois ;

(b) laisser hydrater les pois dans ladite composition aqueuse pendant au moins 3 heures et au plus 8 heures ;

(c) broyer lesdits pois pour obtenir de ce fait des pois broyés ;

(d1) fractionner lesdits pois broyés afin d'obtenir au moins une fraction enrichie en fibres ;

(d2) fractionner ladite fraction enrichie en fibres afin d'obtenir un extrait de pois comprenant des fibres ; et

(e) sécher ledit extrait de pois comprenant des fibres, optionnellement broyer ledit extrait de pois avant ou après l'étape (e).

83. Le procédé selon l'une quelconque des indications 20 à 82, dans lequel l'eau peut être de l'eau du robinet, de l'eau de puits, de l'eau déminéralisée.

84. L'extrait de pois comprenant des fibres pouvant être obtenu à l'aide du procédé selon l'une quelconque des indications 1 à 11, 20 à 83.

Tel qu'utilisé ici, le terme « pois » fait référence aux graines rondes contenues dans la cosse de *Pisum sativum* (pois ridés ou pois lisse) et à ses sous-espèces, variétés ou cultivars. De préférence, les pois sont des pois jaunes, de préférence des pois jaunes secs, c'est-à-dire des pois jaunes qui ont été récoltés à l'état sec. Les termes « fibres », plus précisément « fibres internes de pois » ou « cotylédon » ou « fibres de la paroi cellulaire » tels qu'utilisé ici font par conséquent référence principalement aux fibres contenues dans les graines de pois décortiqués. Selon un mode de réalisation préféré, les fibres de pois contiennent principalement de la pectine, de la lignine, de la cellulose et de l'hémicellulose.
Selon l'invention, les pois sont des pois décortiqués, c'est-à-dire des pois tels qu'ils sont présents dans la cosse mais dont le tégument ou coque externe a été retiré. Le retrait du tégument peut être réalisé par des techniques connues dans l'art, comme par exemple de façon mécanique à l'aide de décortiqueuses. Il est entendu que, lorsqu'il est fait référence ici à des pois décortiqués, dans certains modes de réalisation, pas tous mais néanmoins la grande majorité des pois individuels sont décortiqués, de préférence plus de 50 % des pois, plus préférentiellement plus de 60 %, plus préférentiellement plus de 70 %, encore plus préférentiellement plus de 80 %, encore plus préférentiellement plus de 90 % des pois sont décortiqués.

Les pois, tels qu'utilisés ici, peuvent être triés avant d'être soumis à une hydratation. Par exemple des cailloux ou des matières végétales de plus grande taille, mais aussi des pois endommagés, peuvent être retirés des pois destinés à être utilisés selon l'invention.

Telle qu'utilisée ici, l'expression « préparation d'un extrait de pois comprenant des fibres » fait référence au fait de purifier et de séparer les fibres de certains autres composants du pois.

L'homme du métier comprendra que l'extrait de pois comprenant des fibres comprendra principalement des fibres mais également de l'amidon de pois ainsi qu'une certaine quantité de composants additionnels (impuretés) peut être présente comme des lipides, des protéines, des minéraux, etc...

Selon l'invention, les étapes (a) à (d) du procédé spécifié ci-dessus sont réalisées dans l'ordre suivant : l'étape (a) précède l'étape (b), qui elle-même précède l'étape (c), qui elle-même précède l'étape (d). Cependant, il est également possible selon l'invention de réaliser les étapes (c) et (d) simultanément, c'est-à-dire que l'étape de broyage et l'étape de fractionnement sont réalisées simultanément.

Selon l'étape (a) du procédé décrit ici, des pois décortiqués sont mis en contact avec une solution aqueuse pour former une composition aqueuse comprenant des pois. Selon l'invention, les pois qui sont utilisés dans l'étape (a) sont des pois non broyés (c'est-à-dire des pois entiers). Les pois peuvent, toutefois, dans un mode de réalisation être des pois cassés. Dans un mode de réalisation, les pois sont ronds à la récolte et après séchage. Après avoir retiré le tégument, les morceaux naturels de cotylédons des graines peuvent être séparés manuellement ou mécaniquement, pour donner des « pois cassés ».

Telle qu'utilisée ici, l'expression « composition aqueuse comprenant des pois » utilisée dans l'étape (a) fait référence à une composition comprenant principalement ou constituée exclusivement d'une solution aqueuse telle que de l'eau, en plus des pois. Dans certains modes de réalisation, la composition aqueuse comprend par exemple une suspension de pois dans une solution aqueuse. Dans un mode de réalisation préféré, la solution aqueuse est de l'eau. Dans un mode de réalisation, l'eau peut être de l'eau du robinet, de l'eau de puits, de l'eau déminéralisée. L'eau utilisée est de préférence de l'eau potable, c'est-à-dire de l'eau propre à la consommation humaine.

Dans certains modes de réalisation, la quantité de pois qui est ajoutée à la solution aqueuse pour reconstituer la composition aqueuse comprenant des pois est comprise de préférence entre 150 et 500 kg de pois par m³ de composition aqueuse comprenant des pois, c'est-à-dire que pour 150 à 500 kg de pois une solution aqueuse est ajoutée jusqu'à obtention d'un volume final de 1 m³.

Dans un mode de réalisation, la composition aqueuse comprenant des pois à l'étape (a) du procédé décrit ici a un pH d'au moins 6, de préférence d'au moins 6,2, par exemple d'au moins 6,4, mesuré sur la composition aqueuse comprenant des pois.

Dans un mode de réalisation préféré, les pois décortiqués qui sont en contact avec la composition aqueuse sont récoltés naturellement secs, ou dans un mode de réalisation les pois peuvent être des pois séchés après récolte à maturité. De préférence, les pois sont des pois secs décortiqués, et ont une teneur en matière sèche (en poids) d'au moins 80 % (c'est-à-dire au moins 80 g de matière sèche pour un poids total de 100 g de pois), plus préférentiellement d'au moins 85 %, par exemple d'au moins 90 %, par exemple d'au moins 95 %, comme par exemple une teneur en matière sèche comprise entre 80 % et 95 %, par exemple entre 85 % et 95 %, par exemple entre 90 % et 95 %.

Selon l'étape (b) du procédé décrit ici, les pois de la composition aqueuse sont soumis à une hydratation pendant au moins 30 minutes et au plus 15 heures. Dans un mode de réalisation, les pois de la composition aqueuse sont soumis à une hydratation dans l'étape (b) du procédé décrit pendant une durée d'au moins 1 heure, de préférence d'au moins 2 heures, de préférence d'au moins 3 heures, par exemple d'au moins 4 heures, par exemple d'au moins 5 heures, plus préférentiellement d'au moins 6 heures, d'environ 7 heures, d'environ 8 heures, d'environ 9 heures, par exemple d'au plus 10 heures, par exemple d'au plus 11 heures, par exemple d'au plus 12 heures, par exemple d'au plus 13 heures, par exemple d'au plus 14 heures, par exemple d'au plus 15 heures, Dans un autre mode de réalisation, les pois de la composition aqueuse sont soumis à une hydratation dans l'étape (b) du procédé décrit pendant une durée comprise entre 30 minutes et 14 heures, de préférence entre 1 heure et 14 heures, plus préférentiellement entre 1 heure et 12 heures, plus préférentiellement encore entre 3h et 9h.

Dans un mode de réalisation préféré, lesdits pois à l'étape (b) sont soumis à une étape d'hydratation à une température d'au moins 0 °C, d'au moins 5 °C, d'au moins 10 °C, d'au moins 15 °C, d'au moins 17 °C, d'au moins 20 °C, d'au moins la température ambiante, d'au moins 25 °C, d'au moins 30 °C, d'au moins 35 °C, d'au moins 40 °C, d'au moins 45 °C. Dans un mode de réalisation, lesdits pois sont soumis à une étape d'hydratation à une température d'au plus 5 °C, d'au plus 10 °C, d'au plus 15 °C, d'au plus 17 °C, d'au plus 20 °C, d'au plus la température ambiante, d'au plus 25 °C, d'au plus 30 °C, d'au plus 35 °C, d'au plus 40 °C, d'au plus 45 °C, d'au plus 50 °C. Dans un mode de réalisation, lesdits pois sont soumis à une étape d'hydratation à une température comprise entre 0 °C et 50 °C, entre 0 °C et 30 °C, plus préférentiellement comprise entre 5 °C et 25 °C, encore plus préférentiellement entre 20 °C et 25 °C.

Dans un mode de réalisation, au début ou pendant l'étape d'hydratation une fermentation peut avoir lieu. Tel qu'utilisé ici, le terme « fermentation » a la signification communément admise dans l'art. En complément d'information

on peut préciser que la fermentation est un processus métabolique microbiologique comprenant la conversion de sucres en acides, et/ou en gaz en utilisant des levures et/ou des bactéries. Selon un mode de réalisation, le fait de soumettre une composition aqueuse comprenant des pois à une fermentation, tel qu'utilisée ici, peut par conséquent faire référence au fait d'incuber la composition aqueuse comprenant des pois avec des bactéries et/ou des levures dans des conditions appropriées pour que les bactéries et/ou les levures soient métaboliquement actives.

Dans un mode de réalisation, la composition aqueuse comprenant des pois est soumise à une fermentation dans l'étape (b) du procédé décrit ci-dessus avec des bactéries lactiques. Telle qu'utilisée ici, l'expression « bactéries lactiques » fait référence à une population de cocci ou de bacilles gram positifs, à faible teneur en guanine + cytosine, tolérants aux acides, généralement non sporulés, anaérobies qui sont associés par leurs caractéristiques métaboliques et physiologiques communes et produisent de l'acide lactique en tant que principal produit final métabolique de la fermentation des glucides. Ces bactéries peuvent généralement être présentes dans les plantes en décomposition et les produits lactés. Telles qu'utilisées ici, les bactéries lactiques peuvent être non pathogènes en ce sens qu'elles n'occasionnent pas de dommages ou ne conduisent pas à des effets délétères si elles sont ingérées. De préférence, les bactéries lactiques, telles qu'utilisées ici, sont un ou plusieurs genres bactériens choisis parmi le groupe comprenant *Lactobacillus, Pediococcus, Lactococcus, Leuconostoc, Streptococcus, Aerococcus, Carnobacterium, Enterococcus, Oenococcus, Sporolactobacillus, Tetragenococcus, Vagococcus,* et *Weisella,* et leurs combinaisons. De manière préférée entre toutes, les bactéries lactiques sont des espèces de lactobacilles, de manière préférée entre toutes choisies dans le groupe constitué de : *Lactobacillus fermentum, Lactobacillus crispatus, Lactobacillus panis, Lactobacillus mucosae, Lactobacillus pontis, Lactobacillus acidophilus, Lactobacillus plantarum, Lactobacillus helveticus, Lactobacillus buchneri, Lactobacillus delbrueckii,* et *Lactobacillus casei,* et leurs mélanges, par exemple dans le groupe constitué de : *Lactobacillus fermentum, Lactobacillus crispatus, Lactobacillus panis, Lactobacillus mucosae, Lactobacillus pontis, Lactobacillus acidophilus et leurs mélanges, par exemple dans le groupe constitué de : Lactobacillus fermentum, Lactobacillus crispatus, Lactobacillus panis, Lactobacillus mucosae, Lactobacillus pontis,* et leurs mélanges, par exemple lesdites bactéries sont *Lactobacillus fermentum,* ou *Lactobacillus crispatus.* Dans certains modes de réalisation, la fermentation peut être une fermentation spontanée (c'est-à-dire dans laquelle aucun micro-organisme de fermentation n'est délibérément ajouté, mais la fermentation est effectuée par des micro-organismes qui sont naturellement présents sur/dans les pois et/ou dans l'environnement) ou une fermentation inoculée (c'est-à-dire dans laquelle des micro-organismes de fermentation sont délibérément ajoutés). La fermentation peut également être effectuée en transférant une partie ou la totalité de la fraction aqueuse d'une étape de fermentation vers une prochaine fermentation qui sera démarrée ultérieurement, par exemple en transférant au moins 1/10ième du volume de la première fermentation vers au moins une deuxième étape de fermentation. Dans un mode de réalisation préféré, la fermentation est une fermentation anaérobique.

Dans un mode de réalisation, la composition aqueuse comprenant des pois est soumise à une fermentation dans l'étape (b) du procédé décrit ci-dessus jusqu'à ce que le pH des pois soit d'au plus 5,5, de préférence d'au plus 5,0, plus préférentiellement compris entre 3,5 et 5, de préférence, mesuré à température ambiante sur 1 g desdits pois qui ont été broyés puis mis en suspension dans 9 g d'eau, tel que décrit dans la partie expérimentale. Dans un mode de réalisation, la composition aqueuse comprenant des pois est soumise à une fermentation dans l'étape (b) du procédé décrit ci-dessus jusqu'à ce que le pH des pois soit d'au moins 3,5, par exemple d'au moins 3,75, par exemple d'au moins 4,0, par exemple d'au moins 4,25, par exemple d'au moins 4,50, par exemple d'au moins 4,75, par exemple d'au plus 5,0, par exemple d'au plus 5,25, par exemple d'au plus 5,5, compris entre 3,5 et 4,5, par exemple entre 4,0 et 5,0, de préférence entre 4,5 et 5,5, comme par exemple, de préférence, mesuré à température ambiante sur 1 g desdits pois qui ont été broyés puis mis en suspension dans 9 g d'eau, tel que décrit dans la partie expérimentale.

Dans un mode de réalisation, la composition aqueuse comprenant des pois est soumise à une fermentation dans l'étape (b) du procédé décrit ci-dessus jusqu'à ce que le pH des pois diminue d'au moins 1 unité de pH, de préférence d'au moins 1,5 unité de pH, comme par exemple d'au moins 1, par exemple d'au moins 1,1, par exemple d'au moins 1,2, par exemple d'au moins 1,3, par exemple d'au moins 1,4, par exemple d'au moins 1,5, par exemple d'au moins 1,6, par exemple d'au moins 1,7, par exemple d'au moins 1,8, par exemple d'au moins 1,9, par exemple d'au moins 2, par exemple d'au moins 2,1, par exemple d'au moins 2,2, par exemple d'au moins 2,3, par exemple d'au moins 2,4, par exemple d'au moins 2,5, par exemple d'au moins 2,6, par exemple d'au moins 2,7, par exemple d'au moins 2,8, par exemple d'au moins 2,9, par exemple d'au moins 3 unités de pH, de préférence, mesuré à température ambiante sur 1 g desdits pois qui ont été broyés puis mis en suspension dans 9 g d'eau. Dans un autre mode de réalisation, la composition aqueuse comprenant des pois est soumise à une fermentation dans l'étape (b) du procédé décrit ci-dessus jusqu'à ce que le pH des pois diminue de 1 unité de pH à 3 unités de pH, de préférence de 1,5 unité de pH à 3 unités de pH, comme par exemple de 1,5 unité de pH à 2,5 unités de pH, par exemple de 2,0 unités de pH à 3,0 unités de pH, de préférence, mesuré à température ambiante sur 1 g desdits pois qui ont été broyés puis mis en suspension dans 9 g d'eau. À titre d'exemple, et sans limitation, au démarrage de la fermentation, le pH des pois peut être de 6,5, et à la fin de la fermentation, le pH des pois peut être de 5,0, de préférence, mesuré à température ambiante sur 1 g desdits pois qui ont été broyés puis mis en suspension dans 9 g d'eau, tel que décrit dans la partie expérimentale.

Dans un mode de réalisation, la composition aqueuse comprenant des pois est soumise à une fermentation dans l'étape (b) du procédé décrit ci-dessus à une température qui est optimale pour les micro-organismes de fermentation, de préférence à une température qui est au maximum 5 °C supérieure ou inférieure à la température optimale pour les micro-organismes de fermentation. Les températures optimales pour les bactéries et/ou les levures telles que définies ici, sont connues dans l'art. En complément d'information on peut préciser, sans limitation, qu'une température optimale, telle que définie ici, fait référence à la température à laquelle la croissance est maximale. Dans un mode de réalisation supplémentaire, la composition aqueuse comprenant des pois est soumise à une fermentation dans l'étape (b) du procédé décrit ci-dessus à une température d'au moins 30 °C, par exemple comprise entre 30 °C et 50 °C, de préférence entre 35 °C et 45 °C. Dans un autre mode de réalisation, la composition aqueuse comprenant des pois est soumise à une fermentation dans l'étape (b) du procédé décrit ci-dessus à une température comprise entre 30 °C et 40 °C, entre 35 °C et 45 °C, ou entre 40 °C et 50 °C, de préférence une température de 40 °C ou d'environ 40 °C.

Dans un mode de réalisation, la composition aqueuse comprenant des pois est soumise à une fermentation dans l'étape (b) du procédé décrit ci-dessus en présence de micro-organismes de fermentation, tels que des bactéries et/ou des levures, de préférence comprenant une ou plusieurs bactéries lactiques et/ou levures, plus préférentiellement lesdits micro-organismes de fermentation sont choisis dans le groupe constitué d'une ou plusieurs espèces de lactobacilles et/ou levures. Dans un mode de réalisation, la fermentation est réalisée en présence d'un ou plusieurs des micro-organismes spécifiés ci-dessus à une concentration comprise entre $10^2$ ufc/ml et $10^{10}$ ufc/ml de ladite composition aqueuse comprenant des pois, comme une concentration d'au moins $10^2$ ufc/ml, par exemple d'au moins $10^5$ ufc/ml, par exemple d'au moins $10^6$ ufc/ml, par exemple d'au moins $10^7$ ufc/ml, par exemple d'au moins $10^8$ ufc/ml, par exemple d'au moins $10^9$ ufc/ml de ladite composition aqueuse comprenant des pois. Les unités « ufc » (unité formant colonie) sont bien connues dans l'art et peuvent être déterminées par exemple par dénombrement sur plaque. Il est entendu que « ufc/ml » fait référence à la quantité d'unités formant colonie par ml de la composition aqueuse comprenant des pois totale, c'est-à-dire incluant les pois.

Dans un autre mode de réalisation, la composition aqueuse comprenant des pois est soumise à une fermentation dans l'étape (b) du procédé décrit ci-dessus en présence de micro-organismes de fermentation, de préférence comprenant une ou plusieurs bactéries lactiques et/ou levures, plus préférentiellement comprenant une ou plusieurs espèces de lactobacilles, dans lequel les micro-organismes sont ajoutés à une concentration d'au moins $10^2$ ufc/ml de la composition aqueuse comprenant des pois.

Dans un mode de réalisation, les pois après l'étape (b) et avant l'étape (c) du procédé décrit ci-dessus, c'est-à-dire à la fin de l'hydratation et avant l'étape de broyage, ont une teneur en matière sèche (en poids) comprise entre 35 % et 70 %, de préférence entre 35 % et 55 %, par exemple entre 40 % et 50 %, comme par exemple une teneur en matière sèche d'au moins 40 %, par exemple d'au moins 41 %, d'au moins 42 %, par exemple d'au moins 43 %, par exemple d'au moins 44 %, par exemple d'au moins 45 %, par exemple d'au moins 46 %, par exemple d'au moins 47 %, d'environ 48 %, d'environ 49 %, par exemple d'au plus 50 %, par exemple d'au plus 55 %, par exemple d'au plus 60 % sur la base du poids total des pois à la fin de l'hydratation, c'est-à-dire après que les pois aient été isolés de la composition aqueuse. Dans l'étape (c) du procédé selon l'invention décrite ci-dessus, les pois qui ont été soumis à une hydratation dans l'étape (b) sont broyés. À cet effet, dans un mode de réalisation, les pois sont retirés de la composition aqueuse après l'étape (b) puis soumis à un broyage. De préférence, les pois sont lavés ou rincés après l'étape (b) et avant l'étape (c). Le lavage et le rinçage peuvent être réalisés avec une solution aqueuse, de préférence de l'eau, telle que de l'eau du robinet, ou de l'eau de puits traitée, de préférence de l'eau potable, de l'eau déminéralisée, c'est-à-dire de l'eau propre à la consommation humaine.

Tel qu'utilisé ici, le terme « broyage des pois» a la signification communément admise dans l'art. En complément d'information, on peut préciser que le broyage, tel qu'utilisé ici, peut faire référence au processus de mouture des matières solides c'est-à-dire des pois, par exposition à des forces mécaniques qui détruisent la structure en surmontant les forces de liaison internes. Le broyage peut ainsi désintégrer la structure originelle des pois. Dans un mode de réalisation préféré, la taille des particules de pois broyés comprenant au moins 25 % de matière sèche ont une D50 d'au plus 300 $\mu$m, de préférence d'au plus 250 $\mu$m, par exemple d'au plus 200 $\mu$m, la D50 étant définie comme étant la taille des particules pour laquelle cinquante pour cent en volume des particules ont une taille inférieure à D50 ; et la D50 étant mesurée par analyse par diffraction laser sur un analyseur de type Malvern.

Par exemple, la D50 peut être mesurée par tamisage ou par analyse par diffraction laser. Par exemple, les systèmes de diffraction laser Malvern Instruments peuvent être avantageusement utilisés. La taille des particules peut être mesurée par analyse par diffraction laser sur un analyseur de type Malvern. La taille des particules peut être mesurée par analyse par diffraction laser sur un analyseur de type Malvern après que les pois aient été broyés et incorporés dans une suspension aqueuse ayant une teneur en matière sèche de 25 %. Les systèmes Malvern appropriés comprennent les instruments Malvern 2000, Malvern MasterSizer 2000 (tel que MasterSizer S), Malvern 2600 et Malvern 3600. Ces instruments ainsi que leur manuel d'utilisation répondent ou dépassent même les exigences définies dans la norme ISO 13320. L'instrument Malvern MasterSizer (tel que MasterSizer S) peut aussi être utile car il peut mesurer de façon plus précise la D50 vers l'extrémité inférieure de la gamme par exemple pour des tailles moyennes de particules de moins de 8 $\mu$m, en appliquant la théorie de Mie, à l'aide de moyens optiques appropriés.

Dans un mode de réalisation, avant, pendant, ou après le broyage des pois dans l'étape (c) du procédé selon l'invention décrite ci-dessus, une solution aqueuse, de préférence de l'eau, telle que de l'eau du robinet, ou de l'eau de puits traitée, de l'eau déminéralisée de préférence de l'eau potable, c'est-à-dire de l'eau propre à la consommation humaine, est ajoutée aux pois. Dans un mode de réalisation supplémentaire, une quantité de solution aqueuse est ajoutée aux pois de façon à obtenir une composition aqueuse comprenant des pois broyés, ladite composition comprenant de préférence entre 15 % et 35 % de matière sèche sur la base du poids total de la composition, de préférence entre 15 % et 35 %, de préférence entre 20 % et 30 %, comme au moins 19 %, comme au moins 20 %, comme au moins 21 %, comme au moins 22 %, par exemple au moins 23 %, par exemple au moins 24 %, par exemple au moins 25 %, par exemple au moins 26 %, par exemple au moins 27 %, par exemple au moins 28 %, par exemple au moins 29 %, par exemple au plus 30 %, par exemple au plus 35 % de matière sèche sur la base du poids total de la composition. Dans un mode de réalisation préféré, le processus de broyage est un processus de broyage humide, de telle façon qu'une solution aqueuse soit ajoutée aux pois avant ou pendant le broyage.

Tel qu'utilisé ici, le terme « fractionnement » fait référence à un processus par lequel au moins une partie des fibres comprises dans les pois est séparée du reste des pois. Il est entendu que lorsqu'il est fait référence à l'étape de fractionnement, dans certains modes de réalisation, pas tous mais néanmoins la grande majorité des fibres sont séparées, de préférence au moins 50 % de fibres, en poids, de préférence au moins 60 % de fibres, en poids, sur la base de la teneur totale en fibres des pois broyés sont séparées. Le fractionnement desdits pois broyés dans l'étape (d) comprend la soumission desdits pois broyés à au moins une étape de séparation par centrifugation et/ou filtration.

Dans un mode de réalisation, l'étape de fractionnement (d) comprend au moins une étape (d1), l'étape de fractionnement desdits pois broyés dans l'étape (d1) comprenant la soumission desdits pois broyés à au moins une étape de décantation, de filtration et/ou de séparation afin d'obtenir une fraction enrichie en fibres.

Selon un mode préféré de réalisation, l'étape de fractionnement (d) peut être divisée en au moins deux étapes de fractionnement (d1) et (d2).

L'étape de fractionnement (d1) des pois broyés en une fraction enrichie en fibres peut être réalisée par tout moyen connu dans l'art, tel que l'addition d'une base ou d'un sel approprié.

De préférence, les pois broyés sont fractionnés en augmentant le pH des pois broyés. De préférence, l'étape de fractionnement (d1) comprend l'ajustement du pH des pois broyés à un pH d'au moins 6, de préférence d'au moins 7, de manière préférée entre toutes à un pH d'au moins 8 et d'au plus 9. De préférence, l'étape de fractionnement (d1) comprend l'augmentation du pH d'une composition aqueuse comprenant des pois broyés. Dans un mode de réalisation préféré, le pH de la composition est ajusté à un pH d'au moins 6, plus préférentiellement d'au moins 7. Dans un autre mode de réalisation préféré, le pH de la composition est ajusté à une valeur comprise entre pH 6 et pH 9, plus préférentiellement entre pH 7 et pH 9, comme un pH d'au moins 7,0, par exemple d'au moins 7,1, par exemple d'au moins 7,2, par exemple d'au moins 7,3, par exemple d'au moins 7,4, par exemple d'au moins 7,5, par exemple d'au moins 7,6, par exemple d'au moins 7,7, par exemple d'au moins 7,8, par exemple d'au moins 7,9, par exemple d'au moins 8,0, par exemple d'au moins 8,1, par exemple d'au moins 8,2, par exemple d'au moins 8,3, par exemple d'au moins 8,4, par exemple d'au plus 8,5, par exemple d'au plus 8,6, par exemple d'au plus 8,7, par exemple d'au plus 8,8, par exemple d'au plus 8,9, par exemple d'au plus 9,0, de manière préférée entre toutes un pH compris entre pH 7,5 et pH 8,5, de manière préférée entre toutes pH 8 ou environ pH 8. De préférence, cet ajustement du pH est réalisé sur une composition aqueuse comprenant des pois broyés ayant une teneur en matière sèche d'au plus 45 %, de préférence d'au plus 40 %, de préférence d'au plus 35 %, de préférence d'au plus 30 %, de préférence d'au plus 25 %. Dans un mode de réalisation, la teneur en matière sèche des pois broyés est ajustée à la teneur en matière sèche susmentionnée en ajoutant de l'eau en conséquence. Cet ajustement du pH peut être réalisé à l'aide de n'importe quelle base appropriée, telle que l'hydroxyde de sodium, l'hydroxyde de calcium, l'hydroxyde de potassium et autres similaires. Dans un mode de réalisation préféré, le pH des compositions contenant des pois broyés est ajusté en ajoutant de l'hydroxyde de sodium.

Dans un mode de réalisation particulier, les dits pois broyés, après ajustement éventuel du pH, sont soumis à au moins une étape de décantation, de préférence au moins une étape de décantation par centrifugation, dans lesquels les culots de décantation comprennent une fraction enrichie en fibres.

Dans un autre mode de réalisation, les dits pois broyés, après ajustement éventuel du pH, sont soumis à au moins une étape de filtration, dans laquelle le gâteau comprend un extrait de pois comprenant des fibres.

Dans un autre mode de réalisation, les dits pois broyés, après ajustement éventuel du pH, sont soumis à au moins une étape de séparation par hydrocyclones, dans laquelle la sousverse comprend une fraction enrichie en fibres.

Dans un autre mode de réalisation, de manière préférée, les dits pois broyés, après ajustement éventuel du pH, sont soumis à au moins une étape de décantation, de préférence à au moins une étape de décantation par centrifugation afin d'obtenir des culots, et la soumission de ces culots obtenus à au moins une étape de filtration.

Dans un autre mode de réalisation, les dits pois broyés, après ajustement éventuel du pH, sont soumis à au moins une étape de séparation par hydrocyclones, dans laquelle la sousverse comprend une fraction enrichie en fibres, et la soumission de ces sousverses à au moins une étape de décantation par centrifugation.

Tel qu'indiqué ailleurs dans le présent document, l'étape (d) et l'étape (c) du procédé selon l'invention peuvent être réalisées simultanément ou à titre subsidiaire, l'étape (d) peut être réalisée à la suite de l'étape (c).

Il est entendu que la fraction riche en fibres peut également comprendre d'autres constituants, notamment ceux qui sont rendus insolubles ou restent insolubles lors de l'étape de fractionnement.

Dans un mode de réalisation, la fraction enrichie en fibres a une teneur en matière sèche d'au moins 35 % sur la base du poids total de la composition, de préférence une teneur en matière sèche d'au moins 36 %, plus préférentiellement une teneur en matière sèche d'au moins 37 %, comme par exemple une teneur en matière sèche d'au moins 38 %, comme par exemple une teneur en matière sèche d'au moins 39 %, comme par exemple une teneur en matière sèche d'au moins 40 %, d'au moins 41 %, d'au moins 42 %, d'au moins 43 %, d'au moins 44 %, d'au moins 45 %, d'au moins 46 %, d'au moins 47 %, d'au moins 48 %, d'au moins 49 %, d'au moins 50 %. Dans un mode de réalisation, la fraction enrichie en fibres a une teneur en matière sèche d'au plus 50 % sur la base du poids total de la composition, de préférence une teneur en matière sèche d'au plus 51 %, plus préférentiellement une teneur en matière sèche d'au plus 52 %, comme par exemple une teneur en matière sèche d'au plus 53 %, comme par exemple une teneur en matière sèche d'au plus 54 %, comme par exemple une teneur en matière sèche d'au plus 55 %Dans un autre mode de réalisation, la fraction enrichie en fibres a une teneur en matière sèche comprise entre 35 % à 55 % sur la base du poids total de la composition, de préférence une teneur en matière sèche comprise entre 40 % et 50 %.

Dans un mode de réalisation, la fraction enrichie en fibres comprend sur la base de la matière sèche au moins 50 % d'amidon, en poids, plus préférentiellement au moins 51 % d'amidon, en poids, au moins 52 % d'amidon, en poids, comme par exemple au moins 53 % d'amidon, en poids, comme par exemple au moins 54 % d'amidon, en poids, au moins 55 %, au moins 56 %, au moins 57 %, au moins 58 %, au moins 59 %, au moins 60 %, au moins 61 %, au moins 62 %, au moins 63 %, au moins 64 %, au moins 65 %, au moins 66 %, au moins 67 %, au moins 68 %, au moins 69 %, au moins 70 % d'amidon, en poids, au moins 71 % d'amidon, en poids, au moins 72 % d'amidon, en poids, au moins 73 % d'amidon, en poids, au moins 74 % d'amidon, en poids, au moins 75 % d'amidon en poids, au moins 76 % d'amidon en poids, au moins 77 % d'amidon, en poids, au moins 78 % d'amidon, en poids, au moins 79 % d'amidon, en poids, au moins 80 % d'amidon, en poids et au plus 90 % d'amidon, en poids, au plus 89 % d'amidon, en poids, au plus 88 % d'amidon, en poids, au plus 87 % d'amidon, en poids, au plus 86 % d'amidon, en poids, au plus 85 % d'amidon, en poids, au plus 84 % d'amidon, en poids, au plus 83 % d'amidon, en poids, au plus 82 % d'amidon, en poids, au plus 81 % d'amidon, en poids, au plus 80 % d'amidon, en poids, au plus 79 % d'amidon, en poids, au plus 78 % d'amidon, en poids, au plus 77 % d'amidon, en poids, au plus 76 % d'amidon, en poids, au plus 75 % d'amidon, en poids, au plus 74 % d'amidon, en poids, au plus 73 % d'amidon, en poids, au plus 72 % d'amidon, en poids, au plus 71 % d'amidon, en poids, au plus 70 % d'amidon, en poids, au plus 69 % d'amidon, en poids, au plus 68 % d'amidon, en poids, au plus 67 % d'amidon, en poids, au plus 66 % d'amidon, en poids, au plus 65 % d'amidon, en poids, au plus 64 % d'amidon, en poids, au plus 63 % d'amidon, en poids, au plus 62 % d'amidon, en poids, au plus 61 % d'amidon, en poids, au plus 60 % d'amidon, en poids. Dans un mode de réalisation, la fraction enrichie en fibre comprend sur la base de la matière sèche entre 60 % d'amidon, en poids et 80 % d'amidon en poids, par exemple entre 65 % d'amidon, en poids et 75 % d'amidon, en poids.

Le fractionnement de la fraction enrichie en fibres en un extrait de pois comprenant des fibres peut être réalisé par tout moyen connu dans l'art, tel que le tamisage. Les particules les plus fines non-retenues sur le tamis correspondent aux particules d'amidon ainsi qu'aux molécules solubles contenues dans la phase aqueuse. Les fibres ainsi que une partie de l'amidon associé aux fibres sont retenues sur le tamis.

Dans un mode de réalisation, 90 % des particules de l'extrait de pois comprenant des fibres ont une taille < 700 µm, mesuré par granulométrie par voie humide, plus préférentiellement une taille < 500 µm, mesuré par granulométrie par voie humide.

Dans un mode de réalisation, 50 % des particules de l'extrait de pois comprenant des fibres ont une taille < 450 µm, mesuré par granulométrie par voie humide, plus préférentiellement une taille < 400 µm, mesuré par granulométrie par voie humide.

Dans un mode de réalisation, l'extrait de pois comprenant des fibres comprend sur la base de la matière sèche au moins 10 % d'amidon, en poids, plus préférentiellement au moins 11 % d'amidon, en poids, au moins 12 % d'amidon, en poids, comme par exemple au moins 13 % d'amidon, en poids, au moins 14 % d'amidon, en poids, au moins 15 % d'amidon, en poids, au moins 16 % d'amidon, en poids, au moins 17 % d'amidon, en poids, au moins 18 % d'amidon, en poids, au moins 19 % d'amidon, en poids, au moins 20 % d'amidon, en poids, au moins 21 % d'amidon, en poids, au moins 22 % d'amidon, en poids, au moins 23 % d'amidon, en poids, au moins 24 % d'amidon, en poids, au moins 25 % d'amidon, en poids, au moins 26 % d'amidon, en poids, au moins 27 % d'amidon, en poids, au moins 28 % d'amidon, en poids, au moins 29 % d'amidon, en poids, au moins 30 % d'amidon, en poids, au moins 31 % d'amidon, en poids, au moins 32 % d'amidon, en poids, au moins 33 % d'amidon, en poids, au moins 34 % d'amidon, en poids, au moins 35 % d'amidon, en poids, au moins 36 % d'amidon, en poids, au moins 37 % d'amidon, en poids, au moins 38 % d'amidon, en poids, au moins 39 % d'amidon, en poids, au moins 40 % d'amidon, en poids, au moins 41 % d'amidon, en poids, plus préférentiellement au moins 42 % d'amidon, en poids, comme par exemple au moins 43 % d'amidon, en poids, comme par exemple au moins 44 % d'amidon, en poids, au moins 45 % d'amidon, en poids, au moins 46 % d'amidon, en poids, au moins 47 % d'amidon, en poids, au moins 48 % d'amidon, en poids, au moins 49 % d'amidon, en poids, au moins 50 % d'amidon, en poids, au moins 51 % d'amidon, en poids, au moins 52 % d'amidon, en poids, au moins 53 % d'amidon, en poids, au moins 54 % d'amidon, en poids, au moins 55 % d'amidon, en poids, et au plus 60 % d'amidon, en poids, au plus 59 % d'amidon, en poids, au plus 58 % d'amidon, en poids, au plus 57 % d'amidon, en poids, au plus 56 % d'amidon, en poids, au plus 55 % d'amidon, en poids, au plus 54 % d'amidon, en poids, au plus 53 % d'amidon, en poids, au plus 52 % d'amidon, en poids, au plus 51 % d'amidon, en poids, au plus 50 % d'amidon, en poids, au plus 49 % d'amidon, en poids, au plus 48 % d'amidon, en poids, au plus 47 % d'amidon, en poids, au plus 46 % d'amidon, en poids, au plus 45 % d'amidon, en poids, au plus 44 % d'amidon, en poids, au plus 43 % d'amidon, en poids, au plus 42 % d'amidon, en poids, au plus 41 % d'amidon, en poids, au plus 40 % d'amidon, en poids, au plus 39 % d'amidon, en poids, au plus 38 % d'amidon, en poids, au plus 37 % d'amidon, en poids, au plus 36 % d'amidon, en poids, au plus 35 % d'amidon, en poids.

Dans certains modes de réalisation de l'invention, l'extrait de pois comprenant des fibres a un ratio pondéral fibres/amidon d'au moins 40/60, d'au moins 41/59, d'au moins 42/58, d'au moins 43/57, d'au moins 44/56, d'au moins 45/55, de préférence d'au moins 46/54, d'au moins 47/53, d'au moins 48/52, d'au moins 49/51, d'au moins 50/50, de préférence d'au moins 51/49, d'au moins 52/48, d'au moins 53/47, d'au moins 54/46, d'au moins 55/45, de préférence d'au moins 56/44, d'au moins 57/43, d'au moins 58/42, d'au moins 59/41, d'au moins 60/40. Dans certains modes de réalisation, l'extrait de pois comprenant des fibres a un ratio pondéral fibres/amidon d'au plus 85/15, d'au plus 84/16, d'au plus 83/17, d'au plus 82/18, d'au plus 81/19, d'au plus 80/20, d'au plus 79/21, d'au plus 78/22, d'au plus 77/23, d'au plus 76/24, de préférence d'au plus 75/25, d'au plus 74/26, d'au plus 73/27, d'au plus 72/28, d'au plus 71/29, de préférence d'au plus 70/30, d'au plus 69/31, d'au plus 68/32, d'au plus 67/33, d'au plus 66/34, de préférence d'au plus 65/35. Dans certains modes de réalisation, l'extrait de pois comprenant des fibres a un ratio pondéral fibres/amidon compris entre 40/60 et 85/15, par exemple entre 50/50 et 70/30, par exemple entre 55/45 et 65/35.

Dans certains modes de réalisation de l'invention, l'extrait de pois comprenant des fibres a une rétention en eau d'au moins 5 g d'eau/g de matière sèche, d'au moins 6 g d'eau/g de matière sèche, d'au moins 7 g d'eau/g de matière sèche, d'au moins 8 g d'eau/g de matière sèche, d'au moins 9 g d'eau/g de matière sèche, d'au moins 10 g d'eau/g de matière sèche ; la rétention en eau étant déterminée par la méthode suivante:

- Peser précisément 2,00 g de matière sèche d'extrait de pois comprenant des fibres dans un tube préalablement taré (P1)

- Ajouter la quantité d'eau suffisante pour obtenir un volume d'eau final de 38 ml

- Agiter le tube manuellement pendant 5 secondes

- Laisser reposer le tube pendant 18 heures

- Centrifuger le milieu à 1820 G pendant 10 minutes

- Laisser de nouveau reposer le tube pendant 10 minutes

- Ecarter le surnageant

- Peser le tube contenant le culot (P2)

-

    Appliquer la formule RE =((P2 -P1) - (m*maitère sèche % / 100)) / (m*matière sèche / 100)

Avec P1 : Tare du tube (g) ; P2 : Masse tare + culot (g) ; m : masse d'extrait de pois comprenant des fibres (g).

Dans certains modes de réalisation de l'invention, l'extrait de pois comprenant des fibres a une rétention en eau d'au plus 21 g d'eau/g de matière sèche, d'au plus 20 g d'eau/g de matière sèche, d'au plus 19 g d'eau/g de matière sèche, d'au plus 18 g d'eau/g de matière sèche, d'au plus 17 g d'eau/g de matière sèche, d'au plus 16 g d'eau/g de matière sèche, d'au plus 15 g d'eau/g de matière sèche, d'au plus 14 g d'eau/g de matière sèche.

Dans certains modes de réalisation de l'invention, l'extrait de pois comprenant des fibres a une rétention en eau d'au moins 5 g d'eau/g de matière sèche, d'au moins 6 g d'eau/g de matière sèche, d'au moins 7 g d'eau/g de matière sèche, d'au moins 8 g d'eau/g de matière sèche, d'au moins 9 g d'eau/g de matière sèche, d'au moins 10 g d'eau/g de matière sèche, d'au moins 11 g d'eau/g de matière sèche, d'au moins 12 g d'eau/g de matière sèche, d'au moins 13 g d'eau/g de matière sèche.

Dans certains modes de réalisation de l'invention, l'extrait de pois comprenant des fibres a une rétention en eau comprise entre 5 g d'eau/g de matière sèche et 21 g d'eau/g de matière sèche, plus préférentiellement entre 8 g d'eau/g de matière sèche et 18 g d'eau/g de matière sèche et encore plus préférentiellement entre 10 g d'eau/g de matière sèche et 16 g d'eau/g de matière sèche, et encore plus préférentiellement entre 12 g d'eau/g de matière sèche et 14 g d'eau/g de matière sèche.

Dans une autre étape supplémentaire, les extraits de pois comprenant des fibres peuvent être soumis à un séchage, qu'elles aient ou non été soumises au préalable à une augmentation de la matière sèche.

Dans un mode de réalisation préféré, afin d'augmenter la matière sèche de l'extrait de pois comprenant des fibres, une étape de concentration peut être mise en oeuvre, par exemple par passage dans une presse ou une décanteuse, plus particulièrement dans une presse.

Dans un mode de réalisation, l'extrait de pois comprenant des fibres après une étape de concentration a une teneur en matière sèche d'au moins 8 % sur la base du poids total de la composition, de préférence une teneur en matière sèche d'au moins 15 %, plus préférentiellement une teneur en matière sèche d'au moins 20 %, d'au moins 25%, d'au moins 30 %, d'au moins 35 %.

Dans un autre mode de réalisation, l'extrait de pois comprenant des fibres après passage dans une presse comprend une teneur en matière sèche comprise entre 8 % et 40 % sur la base du poids total de la composition, de préférence de 20 % à 30 %, plus préférentiellement de 25 % à 35 %.

Dans un mode de réalisation, au moins une étape de séchage (e) dudit extrait de pois comprenant des fibres est mise en oeuvre.

Le séchage peut être effectué par tout moyen connu dans l'art, tel que par application d'air chaud, évaporation, lyophilisation, séchage par contact, séchage à la vapeur, séchage diélectrique, séchage sur cylindres, séchage éclair, séchage flash, séchage whirl flash, séchage sur lit d'air fluidisé, etc. Dans un mode de réalisation préféré, l'extrait de pois comprenant des fibres est séché sur un sécheur flash.

Dans un mode de réalisation particulier, avant l'étape de séchage (e), une étape d'augmentation de la matière sèche est mise en oeuvre, plus préférentiellement par une étape de recirculation du produit séché.

Dans un mode de réalisation, l'extrait de pois comprenant des fibres obtenu après l'étape de séchage (e) a une matière sèche d'au moins 80 % sur la base du poids total de la composition. Dans un mode de réalisation, l'extrait de pois comprenant des fibres obtenu après l'étape de séchage (e) a une teneur en matière sèche d'au plus de 95 % sur la base du poids total de la composition, d'au plus 94 %, d'au plus 93 %, d'au plus 92 %, d'au plus 91 %, plus préférentiellement d'au plus 90 %, d'au plus 89 %, d'au plus 88 %, d'au plus 87 %, d'au plus 86 %, d'au plus 85 %.

Dans un mode de réalisation, l'extrait de pois comprenant des fibres obtenu après une étape de séchage (e) comprend sur la base de la matière sèche au moins 35 % de fibres, en poids et au plus 90 % de fibres, en poids, entre 35 % de fibres, en poids et 90 % de fibres, en poids, plus préférentiellement entre 40 % et 85 % de fibres, en poids, plus préférentiellement entre 45 % de fibres, en poids et 80 % de fibres, en poids, au moins 36 % de fibres, en poids, au moins 37 % de fibres en poids, au moins 38 % de fibres, en poids, au moins 39 % de fibres, en poids, au moins 40 % de fibres, en poids, au moins 41 % de fibres, en poids, au moins 42 % de fibres, en poids, au moins 43 % de fibres, en poids, au moins 44 % de fibres, en poids, au moins 45 % de fibres, en poids, au moins 46 % de fibres, en poids, au moins 47 % de fibres, en poids, au moins 48 % de fibres, en poids, au moins 49 % de fibres, en poids, au moins 50 % de fibres, en poids, au moins 51 % de fibres, en poids, au moins 52 % de fibres, en poids, au moins 53 % de fibres, en poids, au moins 54 % de fibres, en poids, au moins 55 % de fibres, en poids, au moins 56 % de fibres, en poids, au moins 57 % de fibres, en poids, au moins 58 % de fibres, en poids, au moins 59 % de fibres, en poids, au moins 60 % de fibres, en poids, au moins 61 % de fibres, en poids, au moins 62 % de fibres, en poids, au moins 63 % de fibres, en poids, au moins 64 % de fibres, en poids, au moins 65 % de fibres, en poids, au moins 66 % de fibres, en poids, au moins 67 % de fibres, en poids, au moins 68 % de fibres, en poids, au moins 69 % de fibres, en poids, au moins 70 % de fibres, en poids.

Dans un mode de réalisation, l'extrait de pois comprenant des fibres obtenu après une étape de séchage (e) comprend sur la base de la matière sèche au plus 60 % de fibres, en poids, au plus 61 % de fibres, en poids, au plus 62 % de fibres, en poids, au plus 63 % de fibres, en poids, au plus 64 % de fibres, en poids, au plus 65 % de fibres, en poids, au plus 66 % de fibres, en poids, au plus 67 % de fibres, en poids, au plus 68 % de fibres, en poids, au plus 69 % de fibres, en poids, au plus 70 % de fibres, en poids, au plus 71 % de fibres, en poids, au plus 72 % de fibres, en poids, au plus 73 % de fibres, en poids, au plus 74 % de fibres, en poids, au plus 75 % de fibres, en poids, au plus 76 % de fibres, en poids, au plus 77 % de fibres, en poids, au plus 78 % de fibres, en poids, au plus 79 % de fibres, en poids, au plus 80 % de fibres, en poids, au plus 81 % de fibres, en poids, au plus 82 % de fibres, en poids, au plus 83 % de fibres, en poids, au plus 84 % de fibres, en poids, au plus 85 % de fibres, en poids, au plus 86 % de fibres, en poids, au plus 87 % de fibres, en poids, au plus 88 % de fibres, en poids, au plus 89 % de fibres, en poids, au plus 90 % de fibres, en poids.

Dans un mode de réalisation, l'extrait de pois comprenant des fibres obtenu après l'étape de séchage (e) comprend sur la base de la matière sèche au moins 10 % d'amidon, en poids, plus préférentiellement au moins 11 % d'amidon, en poids, au moins 12 % d'amidon, en poids, comme par exemple au moins 13 % d'amidon, en poids, au moins 14 % d'amidon, en poids, au moins 15 % d'amidon, en poids, au moins 16 % d'amidon, en poids, au moins 17 % d'amidon, en poids, au moins 18 % d'amidon, en poids, au moins 19 % d'amidon, en poids, au moins 20 % d'amidon, en poids, au moins 21 % d'amidon, en poids, au moins 22 % d'amidon, en poids, au moins 23 % d'amidon, en poids, au moins 24 % d'amidon, en poids, au moins 25 % d'amidon, en poids, au moins 26 % d'amidon, en poids, au moins 27 % d'amidon, en poids, au moins 28 % d'amidon, en poids, au moins 29 % d'amidon, en poids, au moins 30 % d'amidon, en poids, au moins 31 % d'amidon, en poids, au moins 32 % d'amidon, en poids, au moins 33 % d'amidon, en poids, au moins 34 % d'amidon, en poids, au moins 35 % d'amidon, en poids, au moins 36 % d'amidon, en poids, au moins 37 % d'amidon, en poids, au moins 38 % d'amidon, en poids, au moins 39 % d'amidon, en poids, au moins 40 % d'amidon, en poids, au moins 41 % d'amidon, en poids, plus préférentiellement au moins 42 % d'amidon, en poids, comme par exemple au moins 43 % d'amidon, en poids, comme par exemple au moins 44 % d'amidon, en poids, au moins 45 % d'amidon, en poids, au moins 46 % d'amidon, en poids, au moins 47 % d'amidon, en poids, au moins 48 % d'amidon, en poids, au moins 49 % d'amidon, en poids, au moins 50 % d'amidon, en poids, au moins 51 % d'amidon, en poids, au moins 52 % d'amidon, en poids, au moins 53 % d'amidon, en poids, au moins 54 % d'amidon, en poids, au moins 55 % d'amidon, en poids, et au plus 60 % d'amidon, en poids, au plus 59 % d'amidon, en poids, au plus 58 % d'amidon, en poids, au plus 57 % d'amidon, en poids, au plus 56 % d'amidon, en poids, au plus 55 % d'amidon, en poids, au plus 54 % d'amidon, en poids, au plus 53 % d'amidon, en poids, au plus 52 % d'amidon, en poids, au plus 51 % d'amidon, en poids, au plus 50 % d'amidon, en poids, au plus 49 % d'amidon, en poids, au plus 48 % d'amidon, en poids, au plus 47 % d'amidon, en poids, au plus 46 % d'amidon, en poids, au plus 45 % d'amidon, en poids, au plus 44 % d'amidon, en poids, au plus 43 % d'amidon, en poids, au plus 42 % d'amidon, en poids, au plus 41 % d'amidon, en poids, au plus 40 % d'amidon, en poids, au plus 39 % d'amidon, en poids, au plus 38 % d'amidon, en poids, au plus 37 % d'amidon, en poids, au plus 36 % d'amidon, en poids, au plus 35 % d'amidon, en poids.

Dans certains modes de réalisation de l'invention, l'extrait de pois comprenant des fibres obtenu après l'étape de séchage (e) a un ratio pondéral fibres/amidon d'au moins 40/60, d'au moins 41/59, d'au moins 42/58, d'au moins 43/57, d'au moins 44/56, d'au moins 45/55, de préférence d'au moins 46/54, s'au moins 47/53, d'au moins 48/52, d'au moins 49/51, d'au moins 50/50, de préférence d'au moins 51/49, d'au moins 52/48, d'au moins 53/47, d'au moins 54/46, d'au moins 55/45, de préférence d'au moins 56/44, d'au moins 57/43, d'au moins 58/42, d'au moins 59/41, d'au moins 60/40. Dans certains modes de réalisation, l'extrait de pois comprenant des fibres a un ratio pondéral fibres/amidon d'au plus 85/15, d'au plus 84/16, d'au plus 83/17, d'au plus 82/18, d'au plus 81/19, d'au plus 80/20, d'au plus 79/21, d'au plus 78/22, d'au plus 77/23, d'au plus 76/24, de préférence d'au plus 75/25, d'au plus 74/26, d'au plus 73/27, d'au plus 72/28, d'au plus 71/29, de préférence d'au plus 70/30, d'au plus 69/31, d'au plus 68/32, d'au plus 67/33, d'au plus 66/34, de préférence d'au plus 65/35. Dans certains modes de réalisation, l'extrait de pois comprenant des fibres a un ratio pondéral fibres/amidon compris entre 40/60 et 85/15, par exemple entre 50/50 et 70/30, par exemple entre 55/45 et 65/35.

Dans certains modes de réalisation de l'invention, l'extrait de pois comprenant des fibres obtenu après l'étape de séchage (e) a une rétention en eau d'au moins 5 g d'eau/g de matière sèche, d'au moins 6 g d'eau/g de matière sèche, d'au moins 7 g d'eau/g de matière sèche, d'au moins 8 g d'eau/g de matière sèche, d'au moins 9 g d'eau/g de matière sèche, d'au moins 10 g d'eau/g de matière sèche, d'au moins 11 g d'eau/g de matière sèche, d'au moins 12 g d'eau/g de matière sèche.

Dans certains modes de réalisation de l'invention, l'extrait de pois comprenant des fibres obtenu après l'étape de séchage (e) a une rétention en eau d'au plus 20 g d'eau/g de matière sèche, d'au plus 19 g d'eau/g de matière sèche, d'au plus 18 g d'eau/g de matière sèche, d'au plus 17 g d'eau/g de matière sèche, d'au plus 16 g d'eau/g de matière sèche, d'au plus 15 g d'eau/g de matière sèche, d'au plus 14 g d'eau/g de matière sèche, d'au plus 13 g d'eau/g de matière sèche, d'au plus 12 g d'eau/g de matière sèche.

Dans certains modes de réalisation de l'invention, l'extrait de pois comprenant des fibres obtenu après l'étape de séchage (e) a une rétention en eau comprise entre 5 g d'eau/g de matière sèche et 21 g d'eau/g de matière sèche, plus préférentiellement entre 8 g d'eau/g de matière sèche et 18 g d'eau/g de matière sèche et encore plus préférentiellement entre 10 g d'eau/g de matière sèche et 16 g d'eau/g de matière sèche, et encore plus préférentiellement entre 12 g d'eau/g de matière sèche et 14 g d'eau/g de matière sèche.

Dans certains modes de réalisation de l'invention, l'extrait de pois comprenant des fibres obtenu après l'étape de séchage (e) a une rétention en huile comprise entre 2,5 g d'huile/g de matière sèche et 5,0 g d'huile/g de matière sèche, plus préférentiellement entre 2,7 g d'huile/g de matière sèche et 3,5 g d'huile/g de matière sèche et encore plus préférentiellement entre 2,9 g d'huile/g de matière sèche et 3,4 g d'huile/g de matière sèche, et encore plus préférentiellement entre 3,0 g d'huile/g de matière sèche et 3,4 g d'huile/g de matière sèche.

Dans un mode de réalisation, l'extrait de pois comprenant des fibres obtenu après l'étape de séchage (e) a une force de gel après traitement thermique compris entre 400 g et 900 g, plus préférentiellement compris entre 450 g et 700 g, plus préférentiellement compris entre 450 g et 650 g, plus préférentiellement compris entre 450 g et 600 g, encore plus préférentiellement compris entre 500 g et 600 g.

Dans un mode de réalisation, 90 % des particules de l'extrait de pois comprenant des fibres obtenu après l'étape de séchage (e) ont une taille < 700 μm, mesuré par granulométrie par voie sèche, plus préférentiellement une taille < 600 μm, mesuré par granulométrie par voie sèche, plus préférentiellement encore une taille < 500 μm, mesuré par granulométrie par voie sèche,

Dans un mode de réalisation, 50 % des particules de l'extrait de pois comprenant des fibres obtenu après l'étape de séchage (e) ont une taille < 400 μm, mesuré par granulométrie par voie sèche, plus préférentiellement une taille < 300 μm, mesuré par granulométrie par voie sèche.

Dans un mode de réalisation, un deuxième broyage peut avoir lieu après ou pendant l'étape (d) à n'importe quel moment, de préférence après l'étape (e).

Dans un mode de réalisation, l'extrait de pois comprenant des fibres obtenu après un deuxième broyage comprend sur la base de la matière sèche, au moins 35 % de fibres, en poids et au plus 90 % de fibres, en poids, entre 35 % de fibres, en poids et 90 % de fibres, en poids, plus préférentiellement entre 40 % et 85 % de fibres, en poids, plus préférentiellement entre 45 % de fibres, en poids et 80 % de fibres, en poids, au moins 36 % de fibres, en poids, au moins 37 % de fibres en poids, au moins 38 % de fibres, en poids, au moins 39 % de fibres, en poids, au moins 40 % de fibres, en poids, au moins 41 % de fibres, en poids, au moins 42 % de fibres, en poids, au moins 43 % de fibres, en poids, au moins 44 % de fibres, en poids, au moins 45 % de fibres, en poids, au moins 46 % de fibres, en poids, au moins 47 % de fibres, en poids, au moins 48 % de fibres, en poids, au moins 49 % de fibres, en poids, au moins 50 % de fibres, en poids, au moins 51 % de fibres, en poids, au moins 52 % de fibres, en poids, au moins 53 % de fibres, en poids, au moins 54 % de fibres, en poids, au moins 55 % de fibres, en poids, au moins 56 % de fibres, en poids, au moins 57 % de fibres, en poids, au moins 58 % de fibres, en poids, au moins 59 % de fibres, en poids, au moins 60 % de fibres, en poids, au moins 61 % de fibres, en poids, au moins 62 % de fibres, en poids, au moins 63 % de fibres, en poids, au moins 64 % de fibres, en poids, au moins 65 % de fibres, en poids, au moins 66 % de fibres, en poids, au moins 67 % de fibres, en poids, au moins 68 % de fibres, en poids, au moins 69 % de fibres, en poids, au moins 70 % de fibres, en poids et au plus 60 % de fibres, en poids, au plus 61 % de fibres, en poids, au plus 62 % de fibres, en poids, au plus 63 % de fibres, en poids, au plus 64 % de fibres, en poids, au plus 65 % de fibres, en poids, au plus 66 % de fibres, en poids, au plus 67 % de fibres, en poids, au plus 68 % de fibres, en poids, au plus 69 % de fibres, en poids, au plus 70 % de fibres, en poids, au plus 71 % de fibres, en poids, au plus 72 % de fibres, en poids, au plus 73 % de fibres, en poids, au plus 74 % de fibres, en poids, au plus 75 % de fibres, en poids, au plus 76 % de fibres, en poids, au plus 77 % de fibres, en poids, au plus 78 % de fibres, en poids, au plus 79 % de fibres, en poids, au plus 80 % de fibres, en poids, au plus 81 % de fibres, en poids, au plus 82 % de fibres, en poids, au plus 83 % de fibres, en poids, au plus 84 % de fibres, en poids, au plus 85 % de fibres, en poids, au plus 86 % de fibres, en poids, au plus 87 % de fibres, en poids, au plus 88 % de fibres, en poids, au plus 89 % de fibres, en poids, au plus 90 % de fibres, en poids.

Dans certains modes de réalisation de l'invention, l'extrait de pois comprenant des fibres obtenu après un deuxième broyage a un ratio pondéral fibres/amidon d'au moins 40/60, d'au moins 41/59, d'au moins 42/58, d'au moins 43/57, d'au moins 44/56, d'au moins 45/55, de préférence d'au moins 46/54, s'au moins 47/53, d'au moins 48/52, d'au moins 49/51, d'au moins 50/50, de préférence d'au moins 51/49, d'au moins 52/48, d'au moins 53/47, d'au moins 54/46, d'au moins 55/45, de préférence d'au moins 56/44, d'au moins 57/43, d'au moins 58/42, d'au moins 59/41, d'au moins 60/40. Dans certains modes de réalisation, l'extrait de pois comprenant des fibres a un ratio pondéral fibres/amidon d'au plus 85/15, d'au plus 84/16, d'au plus 83/17, d'au plus 82/18, d'au plus 81/19, d'au plus 80/20, d'au plus 79/21, d'au plus 78/22, d'au plus 77/23, d'au plus 76/24, de préférence d'au plus 75/25, d'au plus 74/26, d'au plus 73/27, d'au plus 72/28, d'au plus 71/29, de préférence d'au plus 70/30, d'au plus 69/31, d'au plus 68/32, d'au plus 67/33, d'au plus 66/34, de préférence d'au plus 65/35. Dans certains modes de réalisation, l'extrait de pois comprenant des fibres a un ratio pondéral fibres/amidon compris entre 40/60 et 85/15, par exemple entre 50/50 et 70/30, par exemple entre 55/45 et 65/35.

Dans un mode de réalisation, l'extrait de pois comprenant des fibres obtenu après un deuxième broyage comprend sur la base de la matière sèche au moins 10 % d'amidon, en poids, plus préférentiellement au moins 11 % d'amidon, en poids, au moins 12 % d'amidon, en poids, comme par exemple au moins 13 % d'amidon, en poids, au moins 14 % d'amidon, en poids, au moins 15 % d'amidon, en poids, au moins 16 % d'amidon, en poids, au moins 17 % d'amidon, en poids, au moins 18 % d'amidon, en poids, au moins 19 % d'amidon, en poids, au moins 20 % d'amidon, en poids, au moins 21 % d'amidon, en poids, au moins 22 % d'amidon, en poids, au moins 23 % d'amidon, en poids, au moins 24 % d'amidon, en poids, au moins 25 % d'amidon, en poids, au moins 26 % d'amidon, en poids, au moins 27 % d'amidon, en poids, au moins 28 % d'amidon, en poids, au moins 29 % d'amidon, en poids, au moins 30 % d'amidon, en poids, au moins 31 % d'amidon, en poids, au moins 32 % d'amidon, en poids, au moins 33 % d'amidon, en poids, au moins 34 % d'amidon, en poids, au moins 35 % d'amidon, en poids, au moins 36 % d'amidon, en poids, au moins 37 % d'amidon, en poids, au moins 38 % d'amidon, en poids, au moins 39 % d'amidon, en poids, au moins 40 % d'amidon, en poids, au moins 41 % d'amidon, en poids, plus préférentiellement au moins 42 % d'amidon, en poids, comme par exemple au moins 43 % d'amidon, en poids, comme par exemple au moins 44 % d'amidon, en poids, au moins 45 % d'amidon, en poids, au moins 46 % d'amidon, en poids, au moins 47 % d'amidon, en poids, au moins 48 % d'amidon, en poids, au moins 49 % d'amidon, en poids, au moins 50 % d'amidon, en poids, au moins 51 % d'amidon, en poids, au moins 52 % d'amidon, en poids, au moins 53 % d'amidon, en poids, au moins 54 % d'amidon, en poids, au moins 55 % d'amidon, en poids, et au plus 60 % d'amidon, en poids, au plus 59 % d'amidon, en poids, au plus 58 % d'amidon, en poids, au plus 57 % d'amidon, en poids, au plus 56 % d'amidon, en poids, au plus 55 % d'amidon, en poids, au plus 54 % d'amidon, en poids, au plus 53 % d'amidon, en poids, au plus 52 % d'amidon, en poids, au plus 51 % d'amidon, en poids, au plus 50 % d'amidon, en poids, au plus 49 % d'amidon, en poids, au plus 48 % d'amidon, en poids, au plus 47 % d'amidon, en poids, au plus 46 % d'amidon, en poids, au plus 45 % d'amidon, en poids, au plus 44 % d'amidon, en poids, au plus 43 % d'amidon, en poids, au plus 42 % d'amidon, en poids, au plus 41 % d'amidon, en poids, au plus 40 % d'amidon, en poids, au plus 39 % d'amidon, en poids, au plus 38 % d'amidon, en poids, au plus 37 % d'amidon, en poids, au plus 36 % d'amidon, en poids, au plus 35 % d'amidon, en poids.

Dans un mode de réalisation, 50 % des particules de l'extrait de pois comprenant des fibres obtenu après un deuxième broyage ont une taille < 200 µm, mesuré par granulométrie par voie sèche, plus préférentiellement une taille < 100 µm, mesuré par granulométrie par voie sèche.

Dans un mode de réalisation, 90 % des particules de l'extrait de pois comprenant des fibres obtenu après un deuxième broyage ont une taille < 400 µm, mesuré granulométrie par voie sèche, plus préférentiellement une taille < 300 µm, mesuré par granulométrie par voie sèche. Dans certains modes de réalisation de l'invention, l'extrait de pois comprenant des fibres obtenu après un deuxième broyage a une rétention en eau d'au moins 5 g d'eau/g de matière sèche, d'au moins 6 g d'eau/g de matière sèche, d'au moins 7 g d'eau/g de matière sèche, d'au moins 8 g d'eau/g de matière sèche, d'au moins 9 g d'eau/g de matière sèche, d'au moins 10 g d'eau/g de matière sèche, d'au moins 11 g d'eau/g de matière sèche, d'au moins 12 g d'eau/g de matière sèche.

Dans certains modes de réalisation de l'invention, l'extrait de pois comprenant des fibres obtenu après un deuxième broyage a une rétention en eau d'au plus 20 g d'eau/g de matière sèche, d'au plus 19 g d'eau/g de matière sèche, d'au plus 18 g d'eau/g de matière sèche, d'au plus 17 g d'eau/g de matière sèche, d'au plus 16 g d'eau/g de matière sèche, d'au plus 15 g d'eau/g de matière sèche, d'au plus 14 g d'eau/g de matière sèche, d'au plus 13 g d'eau/g de matière sèche, d'au plus 12 g d'eau/g de matière sèche.

Dans certains modes de réalisation de l'invention, l'extrait de pois comprenant des fibres obtenu après un deuxième broyage a une rétention en eau comprise entre 5 g d'eau/g de matière sèche et 21 g d'eau/g de matière sèche, plus préférentiellement entre 8 g d'eau/g de matière sèche et 18 g d'eau/g de matière sèche et encore plus préférentiellement entre 10 g d'eau/g de matière sèche et 16 g d'eau/g de matière sèche, et encore plus préférentiellement entre 12 g d'eau/g de matière sèche et 14 g d'eau/g de matière sèche.

Dans certains modes de réalisation de l'invention, l'extrait de pois comprenant des fibres obtenu après un deuxième broyage a une rétention en huile comprise entre 1,5 g d'huile/g de matière sèche et 5,0 g d'huile/g de matière sèche, plus préférentiellement entre 2,0 g d'huile/g de matière sèche et 4,5 g d'huile/g de matière sèche et encore plus préférentiellement entre 2,0 g d'huile/g de matière sèche et 3,5 g d'huile/g de matière sèche, et encore plus préférentiellement entre 2,0 g d'huile/g de matière sèche et 2,5 g d'huile/g de matière sèche.

Dans un mode de réalisation, l'extrait de pois comprenant des fibres obtenu après un deuxième broyage a une force de gel après traitement thermique compris entre 250 g et 900 g, plus préférentiellement compris entre 250 g et 700 g, plus préférentiellement compris entre 300 g et 650 g, plus préférentiellement compris entre 300 g et 500 g, encore plus préférentiellement compris entre 300 g et 400 g.

La présente invention concerne aussi un extrait de pois comprenant des fibres caractérisé en ce qu'il comprend :

- un ratio pondéral fibres/amidon compris entre 30/70 et 85/15 ;

- une quantité de fibres comprises entre 35 % et 80 % sur la base de la matière sèche dosées par la méthode AOAC-985.29 ;

- une teneur en matière sèche entre 80 % et 95 % sur la base du poids total de l'extrait ;

- une taille de particule D50 < 400 µm, mesuré par granulométrie par voie sèche ;

- une taille de particule D90 < 700 µm, mesuré par granulométrie par voie sèche ;

- un taux de protéines inférieur à 5% sur la base de la matière sèche ; et

- en ce qu'il a une rétention en eau comprise entre 9 g d'eau/g de matière sèche et 15 g d'eau/g de matière sèche ;

- une rétention en huile comprise entre 2,5 g d'huile/g de matière sèche et 5,0 g d'huile/g de matière sèche ; et

- une force de gel comprise entre 400 g et 900 g.

La présente invention concerne aussi un extrait broyé de pois comprenant des fibres caractérisé en ce qu'il comprend :

- une taille de particule D50 < 200 $\mu$m, mesuré par granulométrie par voie sèche ;
- une taille de particule D90 < 400 $\mu$m, mesuré par granulométrie par voie sèche ;
- une quantité de fibres comprises entre 35 % et 80 % sur la base de la matière sèche dosées par la méthode AOAC-985.29 ;
- un ratio pondéral fibres/amidon compris entre 30/70 et 85/15 ;
- une teneur en matière sèche entre 80 % et 95 % sur la base du poids total de l'extrait ; et
- un taux de protéines inférieur à 5% sur la base de la matière sèche ; et en ce qu'il a
- une rétention en eau comprise entre 7 g d'eau/g de matière sèche et 13 g d'eau/g de matière sèche ;
- une rétention en huile comprise entre 1,5 g d'huile/g de matière sèche et 5,0 g d'huile/g de matière sèche ; et
- une force de gel après traitement thermique d'au moins 250 g et d'au plus 900 g, plus préférentiellement entre 300 et 400 g.

L'extrait de pois comprenant des fibres obtenu à l'aide des procédés selon l'invention décrits ici présentent des caractéristiques différentes, telles que des caractéristiques biochimiques et/ou organoleptiques différentes, ainsi qu'une différence quant aux valeurs des paramètres liés à la qualité par comparaison avec les extraits de pois comprenant des fibres connues dans l'art antérieur.

Dans un autre aspect, la présente invention concerne une composition comestible comprenant un extrait de pois comprenant des fibres obtenu ou pouvant être obtenue à l'aide des procédés selon l'invention décrite ici.

De préférence, ladite composition est un aliment destiné à l'alimentation humaine ou animale, plus préférentiellement dans des produits restructurés à base de viande, de volailles, de poissons ou végétales, par exemple dans du jambon, des burgers, des boulettes, des nuggets, des cordons bleu, des saucisses et saucissons de porc et/ou poulet et/ou poisson, des pâtés à base de viande/poisson ou végétariens.

Les aspects et les modes de réalisation de l'invention sont étayés en outre par les exemples non limitatifs suivants.

## EXEMPLES

### Protocoles

Sauf indication contraire, dans les exemples ci-dessous, tous les paramètres sont mesurés, comme défini dans la présente partie. La mesure des paramètres, comme défini dans la présente partie, représente également dans les modes de réalisation préférés le procédé de mesure desdits paramètres selon l'invention comme indiqué dans les aspects et les modes de réalisation respectifs de la description détaillée ci-dessus.

### Dosage de la quantité de fibres comprises dans l'extrait de pois comprenant des fibres

Cette méthode est la méthode AOAC 985.29. La méthode comprend la gélatinisation des échantillons d'aliments séchés (dont la graisse a été extraite si elle est supérieure à 10 %) avec le Termamyl (stable à la chaleur, $\alpha$-amylase), puis l'élimination des protéines et de l'amidon par digestion enzymatique avec une protéase et une amyloglucosidase. Lorsque l'analyse porte sur des mélanges alimentaires, la graisse est extraite avant la détermination de fibres alimentaires totales. Quatre volumes d'alcool éthylique ont été ajoutés pour faire précipiter la fibre alimentaire soluble. Le résidu total a été filtré, lavé avec de l'alcool éthylique à 78 %, puis de l'alcool éthylique à 95 %, et de l'acétone. Après séchage, le résidu a été pesé. Un duplicata de l'échantillon a été utilisé pour analyser les protéines, et un autre duplicata a été utilisé pour être incinéré à 525 °C afin de déterminer la quantité de cendres.

Fibres alimentaires totales % = résidu - poids (protéines + cendres).

### Détermination de la teneur en matière sèche

La teneur totale en matière sèche mesurée par gravimétrie a été déterminée comme étant la teneur en résidus restant après séchage. L'humidité a été évaporée de l'échantillon par séchage dans une étuve.

5 g d'échantillon ont été pesés dans une coupelle en aluminium sèche préalablement tarée (balance de précision Ohaus, capacité 410 g, sensibilité 0,001 g). L'échantillon a été placé dans une étuve à 103 °C jusqu'à ce que le poids résiduel reste constant (au moins 24 heures). L'échantillon a été refroidi dans un dessiccateur pendant 1h puis immédiatement pesé. Les résultats sont exprimés en % (g de matière sèche pour 100 g d'échantillon).

$$\text{Matière sèche MS(\%)} = (m3 - m1) / (m2 - m1) \times 100$$

m1 = poids de la coupelle en aluminium sèche (en g)

m2 = poids de la coupelle en aluminium avec l'échantillon avant séchage (en g)

m3 = poids de la coupelle en aluminium avec l'échantillon après séchage (en g)

**Détermination de la teneur en protéine**

Méthode AFNOR ISO/TS 16634-2 :2009

Le principe de la méthode est de déterminer la teneur en azote total par combustion selon le principe Dumas et de calculer la teneur en protéines brutes. Les échantillons sont transformés en gaz par chauffage dans un tube à combustion. Les composants interférents sont éliminés du mélange gazeux obtenu. Les composés azotés du mélange gazeux, ou une partie représentative de ceux-ci, sont transformés en azote moléculaire, qui est déterminé quantitativement au moyen d'un détecteur à conductivité thermique. La teneur en azote de l'échantillon est ensuite calculée par un système informatique. Le facteur de conversion pour obtenir la teneur en protéines à partir de la teneur en azote est de 6,25.

Les résultats sont exprimés en %.

**Dosage de l'amidon**

Le but est de déterminer la quantité d'amidon présente dans un échantillon en hydrolysant enzymatiquement l'amidon présent. La totalité de l'amidon et les chaines de glucose sont hydrolysés en glucose avec l'$\alpha$-amyloglucosidase. Le glucose est dosé par HPLC. La totalité du glucose dosé est converti en amidon. On admet que tout le glucose présent dans l'échantillon est issu de l'amidon.

*Préparation des solutions*

200 ml de tampon acétate ont été préparés de la manière suivante. Dans un bécher, environ 160 ml d'eau Milli-Q ont été ajoutés à 31,95 g d'acétate de sodium. Le milieu a été agité avec un barreau aimanté afin de bien tout dissoudre. 24 ml d'acide acétique 96 % ont ensuite été ajoutés et le pH a été ajusté à 4,8 (entre 4,75 et 4,85). Le milieu a ensuite été transvasé dans un ballon de 200 ml et la quantité de liquide a été ajustée au trait.

La solution d'amyloglucosidase *(Aspergillus niger)* (Megazyme) (Solution AMG) a été préparée de la façon suivante. 0,38 g d'enzyme ont été ajoutés à de l'eau Milli-Q de manière à obtenir 40 g d'échantillon. Le tout a été mélangé avec un barreau magnétique.

*Préparation des standards pour HPLC*

Tout d'abord, la matière sèche du glucose (voir protocole ci-dessus) a été mesurée. Selon le tableau 1 ci-dessous, le glucose a été pesé et ensuite dissout avec environ 50 ml d'eau Milli-Q. Le tout a été transvasé dans une fiole de 100 ml et ajusté au trait. Cette solution a été diluée pour le standard à 0,5 g/L.

**Tableau 1**

| Concentration standard (g/L) | 0,5 | 2 | 3,5 | 5 |
|---|---|---|---|---|
| Masse de glucose à peser (g) | 0,5 | 0,2 | 0,35 | 0,5 |
| Volume de la fiole (ml) | 100 | 100 | 100 | 100 |
| Dilution | 10g dans 100ml | aucune | aucune | aucune |

La concentration théorique des standards a été calculée en corrigeant avec la valeur de la matière sèche (MS) du glucose. Les valeurs ont été vérifiées le jour même 5 fois à l'aide de l'HPLC. Si la valeur était exacte, la solution était aliquotée dans des tubes eppendorf de 1,5 ml après filtration sur acrodisque 0,2 μm (au plus tard le lendemain) et les tubes ont été mis au congélateur.

Calcul de la concentration de chaque standard

$$Concentration = m \times (MS\ glucose/100) / mf$$

m : masse glucose (g) ; MS glucose : en % ; mf : masse finale (g)

*Hydrolyse de l'échantillon*

5 g d'extrait de pois comprenant des fibres ayant une matière sèche de 20 % ont été pesés dans une bouteille Schott et 25 ml d'eau Milli-Q ont été ajoutés (si l'extrait de pois comprenant des fibres a été séché, 1 g d'échantillon est utilisé). L'ensemble a été mélangé. La bouteille a été mise à l'autoclave à 130 °C pendant 1 h 30. Après autoclave, la bouteille a été laissée à refroidir à 60°C. 2,5 ml de tampon acétate, 45 g d'eau Milli-Q et 2 ml de solution AMG ont été ajoutés. Le flacon a été refermé et incubé au bain-marie agitant à 180 rpm, à 60 °C pendant 2 heures. A la fin de l'incubation, le flacon a été essuyé et pesé. L'échantillon a été est filtré à chaud dans un snap cap. L'échantillon a été dilué au ¼ (2,5 ml de solution dans 7,5 ml d'eau Milli-Q dans un tube de 10 ml à visser). Si l'analyse HPLC ne peut pas se faire le jour même, les échantillons doivent être congelés. Si les échantillons sont congelés, les échantillons doivent être filtrés sur acrodisque de 0,2 μm dans les fioles adaptée à l'HPLC après décongélation.

*Analyse HPLC*

Le glucose a été dosé par HPLC (étalonner avec des solutions de glucose à 0,5 ; 2 ; 3,5 et 5 g/Kg) (2 colonnes ; Type de colonne : échangeuse d'ions phenomenex REZEX K+ 8% ; éluant : 0,1 g/l de $KNO_3$ à pH entre 9,4 et 9,6; débit d'éluant : 0,5 ml/min ; temps d'analyse : 45 minutes; détecteur : réfractomètre R-I marques WATERS).

*Calcul*

Amidon %MS = résultat mesuré (g/kg) * fatceur de dilution hydrolyse* facteur dilution HPLC * (162/180) / (10*MS)

**Détermination de la teneur en cendres**

La teneur en cendres mesurée par gravimétrie a été déterminée comme étant la teneur en résidus restant après chauffage dans un four à moufle à haute température. L'humidité a été évaporée de l'échantillon par séchage dans une étuve.

2 g d'échantillon ont été pesés dans un creuset en porcelaine sec préalablement taré (balance de précision Ohaus, capacité 410 g, sensibilité 0,001 g). Le creuset a été placé dans un four à moufle à 550 °C pendant 24 heures. Le creuset a été placé pendant 1 heure dans une étuve à 103 °C puis dans un dessiccateur pendant 1 heure. Après refroidissement, le creuset a été pesé. Les résultats sont exprimés en % (g de cendres pour 100 g d'échantillon).

$$Cendres\ (\%) = (m3 - m1) / (m2-m1) \times 100$$

m1 = poids du creuset (en g)

m2 = poids du creuset avec l'échantillon (en g)

m3 = poids du creuset avec les cendres (en g)

**Mesure de la rétention en eau (RE) de l'extrait de pois comprenant des fibres**

La RE correspond à la masse d'eau qui peut être retenue par 1 g d'extrait de pois comprenant des fibres.

La RE peut être mesurée sur l'extrait sec de pois comprenant des fibres et sur l'extrait humide de pois comprenant des fibres.

Dans un premier temps, la teneur en matière sèche de l'échantillon a été déterminée. La mesure de RE a été faite en double.

Le tube vide P1 devant servir à l'essai a été pesé. Puis deux cas se sont présentés selon la nature de l'échantillon :

*Cas d'un extrait de pois comprenant des fibres sec* :

2 g exactement d'échantillon ont été pesé dans un tube. 38 ml d'eau déminéralisée ont ensuite été ajoutés.

*Cas d'un extrait de pois comprenant des fibres humide :*

2 g exactement de matière sèche d'échantillon ont été pesé (calculer la masse d'échantillon à peser-la masse dépend de la matière sèche de l'échantillon). Ensuite, la quantité d'eau suffisante pour obtenir une masse d'eau finale de 38 ml a été ajoutée (calculer la masse d'eau déjà présente dans l'échantillon et ajouter le complément pour atteindre 38 ml).

*La suite du protocole est identique, quel que soit l'échantillon.*

L'échantillon a été agité pendant 5 secondes et laissé à gonfler pendant 18h. Ensuite, le milieu a été centrifugé à 1820 G pendant 10 minutes et laissé de nouveau à gonfler pendant 10 minutes. Le surnageant a ensuite été écarté et le tube contenant le culot (P2) a été pesé.

RE (en g d'eau/g d'échantillon)= (masse eau retenue) / (masse matière sèche échantillon) RE =(masse culot (g) - (massa échantillon(g) *matière séche /100) / (masse échantillon (g) *matière sèche % 100)

$$RE = ((P2 - P1) - (m*matière\ sèche\ /\ 100)) / (m * matière\ sèche\ /\ 100)$$

P1 : Tare du tube (g) ; P2 : Masse tare + culot (g) ; m : masse d'extrait de pois contenant des fibres (g).

**Détermination de la taille des particules par voie sèche**

L'objectif a été de déterminer la taille des particules constituant un échantillon en poudre.

Les tamis utilisés ont été les suivants : 1000 $\mu$m, 500 $\mu$m, 400 $\mu$m, 315 $\mu$m, 200 $\mu$m, 100 $\mu$m (tailles des pores).

Tout d'abord, les tamis propres et secs ont été pesés et empilés dans un ordre croissant de taille de pore. 50 g de poudre à analyser ont été pesés et ensuite placés sur le tamis supérieur. L'extrait de pois comprenant des fibres a été tamisé pendant 20 minutes à une intensité de 1,5. Après l'analyse, chaque tamis a été pesé ainsi que le bac du fond avec la poudre qu'il contient. Il était possible d'adapter le nombre et la taille des tamis en fonction des besoins.

% de poudre (pour une granulométrie donnée) = ((Poids total - tare) / Poids échantillon)*100

**Détermination de la taille des particules par voie humide**

L'objectif a été de déterminer la taille des particules constituant un échantillon humide.

L'échantillon traverse différents tamis par lavage et on détermine la quantité de matière et de la matière sèche de chaque fraction pour établir le profil granulométrique.

Les tamis utilisés sont les suivants : 50 $\mu$m, 100 $\mu$m, 200 $\mu$m, 315 $\mu$m, 400 $\mu$m, 500 $\mu$m (taille des pores).

La matière sèche de l'échantillon de départ est mesurée. Chaque tamis a été taré. Les tamis sont ensuite assemblés, du plus fin en bas, au plus grossier en haut. Un bécher de 5L a été ensuite taré et placé sous l'assemblage des tamis. 1 kg précisément d'échantillon a été pesé. L'échantillon a été versé sur le tamis le plus grossier et l'a traversé en « massant » le tamis à la main (porter des gants). De l'eau a été ajoutée dans le premier tamis (500 $\mu$m) jusqu'à ce qu'il soit rempli. Puis le premier tamis a été malaxé manuellement, pour permettre le passage des particules inférieures à 500 µm. Le tamis de 500 µm a ensuite été retiré. Le tamis suivant (400 µm) a ensuite été malaxé pour permettre le passage des particules inférieures à 400 µm. Le tamis de 400 µm a ensuite été retiré. Les mêmes opérations ont été réalisées avec les tamis de 315 µm, 200 µm, 100 µm et 50 µm. Toutes ces étapes ont été renouvelées jusqu'à ce que 5L de liquide soient récupérés dans le bécher.

Quand le lavage fut terminé, la quantité d'échantillon récupérée sur chaque tamis a été pesée. La matière sèche de chaque fraction récupérée sur chaque tamis a été mesurée.

Les résultats sont exprimés de la manière suivante :

$$\text{m échantillon tamis X} = \text{m (tamis X + échantillon tamis X)} - \text{m tamis X}$$

$$\text{m matière sèche échantillon tamis X} = \text{m échantillon tamis X} * \text{matière sèche èchantillon tamis X} / 100$$

$$\text{\& échantillon pour tamis X} = (\text{m matière sèche échantillon tamis X}) / \Sigma (\text{m matière sèche échantillon de tous les tamis})$$

**Mesure du pH sur des pois secs ou sur une composition aqueuse comprenant des pois ou sur une composition aqueuse comprenant des pois broyés**

Le pH a été mesuré à température ambiante à l'aide d'un pH-mètre WTW SERIES Inolab Termil 740. L'appareil a été étalonné à l'aide de solutions tampon à pH 4,01 (tampon technique WTW pH 4,01, modèle STP4, commande n°108706) et à pH 7 (tampon technique WTW pH 7,00, modèle STP7, commande n°108708).

*pH sur des pois entiers*

Lorsque le pH a été mesuré sur des pois, les pois ont été prélevés dans la cuve d'hydratation. Les pois ont été égouttés dans une passoire puis déposés sur un papier absorbant pendant 2 minutes afin d'éliminer l'excès de jus. Les pois ont été broyés pendant 1 minute à l'aide d'un mixeur (Magic Bullet, Homeland Housewares). 1 g des pois broyés a été mis en suspension dans 9 g d'eau déionisée (conductivité de l'eau < 15 µS). La suspension a été de nouveau broyée à l'aide du mixeur. Enfin, le pH de la suspension a été mesuré à température ambiante une fois la valeur stabilisée.

*pH sur une composition aqueuse comprenant des pois*

Lorsque le pH a été mesuré sur la composition aqueuse exempte de pois, un échantillon de solution aqueuse a été prélevé directement dans la cuve d'hydratation. Le pH de l'échantillon a été mesuré une fois la valeur stabilisée.

*pH sur une composition aqueuse comprenant des pois broyés*

Lorsque le pH a été mesuré sur une composition aqueuse comprenant des pois, il a été mesuré directement dans la cuve une fois la valeur stabilisée.

**Dénombrement des bactéries lactiques**

Des dilutions des échantillons ont été réalisées avec EPT Dilucups 9 ml Led techno.

Le milieu utilisé était du MRS agar (selon DE MAN, ROGOSA et SHARPE) commercialisé par Merck Cat. n°1.10661.0500.

Les pois ou la suspension de pois ont été broyés à l'aide d'un broyeur, Magic Bullet, Homeland Housewares.

Lors de l'analyse d'un échantillon de la composition aqueuse exempte de pois, un échantillon a été prélevé directement dans la cuve de fermentation. 1 ml d'échantillon a été étalé. Lorsqu'une dilution s'est avérée nécessaire, 1 ml d'échantillon a été ajouté à la tasse de dilution et cette étape a été répétée jusqu'à obtention de la dilution correcte, puis 1 ml de l'échantillon dilué a été étalé. Les boîtes de Pétri ont été incubées pendant 48 heures à 45 °C.

Lors de l'analyse d'un échantillon de pois, des pois décortiqués ont été prélevés dans la cuve de fermentation. Les pois ont été égouttés dans une passoire puis déposés sur un papier absorbant pendant 2 minutes afin d'éliminer l'excès de jus. Les pois ont été broyés pendant 1 min. Les pois broyés ont été mis en suspension (1 g de pois dans 9 g d'eau déionisée) dans de l'eau déionisée (conductivité < 15 μS). La suspension a été ensuite broyée à l'aide du mixeur. 1 ml de suspension a été étalé. Lorsqu'une dilution s'est avérée nécessaire, 1 ml de suspension a été ajouté à la tasse de dilution et cette étape a été répétée jusqu'à obtention de la dilution correcte, puis 1 ml de l'échantillon dilué a été étalé. Les boîtes de Pétri ont été incubées pendant 48 heures à 45 °C.

**Mesure de l'acidité**

L'acidité a été mesurée à l'aide d'un pH-mètre WTW SERIES Inolab Termil 740. L'appareil a été étalonné à l'aide de solutions tampon à pH 4,01 (tampon technique WTW pH 4,01, modèle STP4, commande n°108706) et à pH 7 (tampon technique WTW pH 7,00, modèle STP7, commande n°108708).
Les pois ou la suspension de pois ont été broyés à l'aide d'un mixeur, Magic Bullet, Homeland Housewares.
Lors de la mesure de l'acidité du « jus de pois », un échantillon (A) a été prélevé directement dans la cuve de fermentation. L'échantillon (A) a été pesé. Une solution d'hydroxyde de sodium à 1 mol/l (C) (n°1.09137.1000 TitriPURR ; densité = d = 1,04 kg/l) a été ajoutée lentement jusqu'à ce que le pH de l'échantillon ait été stabilisé à pH 7 pendant au moins 2 minutes. La masse d'hydroxyde de sodium (B) a été ensuite calculée.

$$\text{Acidité (mEq/kg)} = (B \times (C / d) / A) \times 1000$$

Lors de la mesure de l'acidité des pois, des pois décortiqués ont été prélevés dans la cuve de fermentation. Les pois ont été égouttés dans une passoire puis déposés sur un papier absorbant pendant 2 minutes afin d'éliminer l'excès de jus. Les pois ont été broyés pendant 1 min. Les pois broyés ont été mis en suspension (1 g de pois dans 9 g d'eau déionisée) dans de l'eau déionisée (conductivité < 15 μS). La suspension a été ensuite broyée à l'aide du mixeur. Une suspension de pois a été obtenue.
La quantité exacte de la suspension de pois (A') a été pesée. Une solution d'hydroxyde de sodium à 1 mol/l (C') (n°1.09137.1000 TitriPURR ; densité = d = 1,04 kg/l) a été ajoutée lentement jusqu'à ce que le pH de la suspension ait été stabilisé à pH 7 pendant au moins 2 minutes. La masse d'hydroxyde de sodium (B') a été ensuite calculée.

$$\text{Acidité (mEq/kg)} = (B' \times (C' / d) / (A' / 10)) \times 1000$$

**Mesure de la rétention en huile (RH)**

10 g de d'extrait de pois comprenant des fibres après séchage ont été pesés et dispersés dans 80 g d'huile de Tournesol. L'ensemble (P0) a été laissé à absorber pendant 15 minutes sous agitation magnétique (position 10). 2 tubes (préalablement tarés) à centrifuger ont été remplis jusqu'à 2,5 cm du bord (agiter 1 minute entre les deux tubes). L'ensemble (tube + dispersion) a été pesé (Tempérer les tubes si nécessaire). Les tubes ont été centrifugés (Centrifugeuse de table - MKII / ALC 4217) pendant 10 minutes à 3000 T/min. L'ensemble a été laissé à reposer pendant 8 minutes. Le surnageant a été transvasé et pesé (P1).

$$RH = (\text{en g d'huile/g de fibres}) = (\text{masse huile retenue}) / (\text{masse échantillon})$$

$$RH = (\text{masse culot (g)} - \text{masse échantillon (g)}) / (\text{masse échantillon (g)})$$

$$RH = ((P0 - P1 - (P0/9)) / (P0/9)$$

Avec P0 : masse échantillon + huile, P1 : masse du surnageant

**Analyse des fibres**

*Pectine*

Les pectines ont été quantifiées à l'aide de la méthode décrite dans Food Chemistry 96 (2006), 477-484 « Kinetic of the hydrolysis of pectin galacturonic acid chains and quantification by ionic chromatography », Garna H. *et al.*

La méthode utilise l'acide trifluoroacétique (TFA) 2M.

*Cellulose et Hémicellulose*

La cellulose et l'hémicellulose ont été dosés par la méthode de Englyst ; FIE Chromatography, 3 ; Ingrédients analysis « Measurement of dietary fibre » p84-93. Dans la procédure Englyst, l'amidon est complètement enlevé de manière enzymatique et les polysaccharides non amylacés sont mesurés comme égaux à la somme de ses sucres constituants libérés par hydrolyse acide. Les sucres peuvent être mesurés par Chromatographie liquide, donnant des valeurs pour les monosaccharides individuels, ou plus rapidement par calorimétrie.

*Lignine*

Les lignines soluble et insoluble ont été dosées. La lignine insoluble a été dosée selon la méthode TAPPI T 222 om-11. Les sucres ont été hydrolysés et solubilisés par de l'acide sulfurique. La lignine acide insoluble a été filtrée, séchée et pesée.

La lignine soluble a été dosée par une autre méthode. Le résidu restant après une hydrolyse acide de l'échantillon de biomasse, corrigé pour la teneur en cendres, a été désigné comme la lignine insoluble dans l'acide. Cette valeur, toutefois, ne représente pas la teneur totale de la lignine de l'échantillon. Une petite partie de la lignine est solubilisée au cours de la procédure d'hydrolyse et peut être quantifiée par spectroscopie ultraviolette.

Après que les échantillons aient été hydrolysés selon la méthode TAPPI T 222 om-11, les hydrolysats ont été filtrés et le filtrat a été analysé par spectrophotomètre à une longueur d'onde de 205 nm dans des cuvettes en quartz. Les échantillons ont été dilués de manière à obtenir une absorbance comprise entre 0,2 et ,7.

*Calcul*

La formule est la suivante=

$$\text{Lignine acide soluble (g/L)} = (A / (b * a)) * df$$

Avec A : Absorbance à 205 nm

df : facteur de dilution

b : longueur de la cellule.

a : absorption, égale à 110 L/g-cm

**Mesure de la force de gel**

La force de gel a été déterminée par la mesure de la résistance maximale d'un gel à une compression appliquée par une sonde dirigée par un analyseur de texture. Le gel de fibres est formé à partir d'une suspension de fibres qui a été soumise à un traitement thermique suivi d'un refroidissement.

La rigidité du gel est exprimée soit en g ou N. La méthode a été utilisée sur une poudre d'extrait de pois comprenant des fibres avec une teneur en matière sèche de 85 % à 90% (base en poids). La mesure a été effectuée à température ambiante.

1456,9 g d'eau Milli-Q ont été pesés à une température de 20 °C dans le bol d'un mélangeur (Kenwood major). 243,1 g d'extrait de pois comprenant des fibres ont été pesés (balance Ohaus ARC120, sensibilité 0,01 g, capacité 3100 g) dans un bécher et versés à la surface de l'eau. L'ensemble a été mélangé 90 secondes à la vitesse 1. Les bords du bol ont été raclés. De nouveau, l'ensemble a été mélangé pendant 90 secondes à la vitesse 1. La canette (préalablement tarée ; diamètre 73 mm, hauteur : 44 mm, contenance 150 ml, poids 30,1 g) a été remplie avec une cuillère en tassant régulièrement. La canette tassée doit contenir 145 g de mélange. La canette a été sertie avec la Sertinox et placé dans le bain-marie à 75 °C pendant 50 minutes. La canette a été retirée du bain-marie, séchée et placée au réfrigérateur à 4 °C pendant la nuit.

La force de gel a été mesurée sur un analyseur de texture TA XT2i 15 (Stable Micro Systems, Ltd.) avec une cellule de charge de compression de 5 kg et une sonde conique (cône 45 ° P45C Perspex). La force de gel est la force maximale enregistrée à la fin de la pénétration, exprimée en g.

Paramètres TA-XT2i :

- Mesure de la force en compression - maintien de la force pendant 30s

- Vitesse avant le test : 2,0 mm/s

- Vitesse pendant le test : 1,0 mm/s

- Vitesse après le test : 5,0 mm/s

- Distance de pénétration : 20,0 mm

- Temps : 30,00 s

- Pression/surface de contact: Auto - 1,0 g

**Mesure de la dureté des nuggets**

La dureté des nuggets avant cuisson est définie comme la force nécessaire pour comprimer un nugget sur une distance de 35 mm.
La mesure a été effectuée à l'aide d'un analyseur de texture TAXT2i.
Appareil:

- Analyseur de texture TA-XT2i (Stable Micro Systems, Ltd)
- Charge cellule de compression, 25 kg
- Sonde P45C45° cone perspex

Procédure:

- Paramètres TA-XT2i :

  ○ Mesure de force en compression
  ○ Vitesse avant le test : 2 mm/s
  ○ Vitesse pendant le test : 1 mm/s
  ○ Vitesse après le test : 1 mm/s
  ○ Distance de pénétration : 35 mm
  ○ Température : 0°C
  ○ Pression/surface de contact: Auto - 1,0 g

Les résultats sont enregistrés par l'analyseur et transcrits sur un graphe.
La dureté du nugget est la force maximale enregistrée pendant l'essai (exprimée en "force maximale"). Les résultats des essais ont été obtenus à partir de 20 échantillons et la valeur moyenne a été calculée.

**Mesure de la couleur**

Les coordonnées L*a*b* ont été mesurées à 20 °C à l'aide d'un chromamètre CR5 (Konica Minolta TA Sensing, Europe). L* désigne la luminosité sur une échelle de 0 à 100 du noir au blanc ; a*, (+) rouge ou (-) vert ; et b*, (+) jaune ou (-) bleu.

*Préparation de l'échantillon*

La boîte de Pétri a été remplie avec l'échantillon afin que l'analyse se fasse sur une surface uniforme. La boîte de Pétri a été placée sur l'appareil à l'endroit réservé spécifiquement et l'analyse a débuté.

*Résultats*

Les valeurs L* a*b* sont indiquées par le chromamètre (moyenne de 3 mesures).

**Exemple** 1 : **Procédé de préparation d'un extrait de pois comprenant des fibres selon un mode de réalisation de la présente invention**

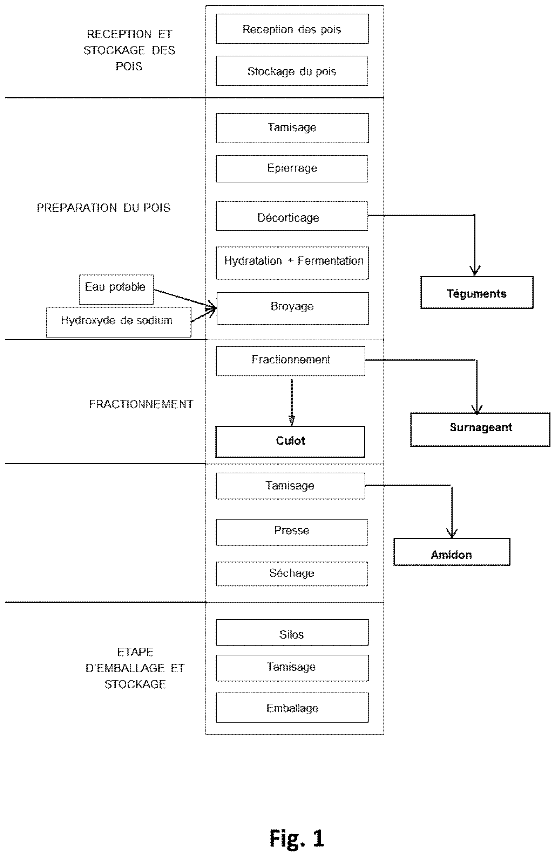

Cet exemple a été réalisé en suivant le protocole représenté schématiquement dans la figure 1. Les pois récoltés secs, désignés ici par « pois secs » (ayant une teneur en matière sèche (sur la base du poids total des pois secs) d'environ 87 %) ont été tamisés et épierrés par passage à travers un épierreur. Ensuite, les pois ont été décortiqués dans une décortiqueuse.

Puis les pois ont été mis en contact avec une solution aqueuse (solution d'eau potable) et soumis à une hydratation. 400 kg de pois par $m^3$ du volume total de composition aqueuse comprenant des pois ont été placés dans une cuve. L'hydratation a été effectuée dans une cuve fermée sans dégazage à une température d'environ 40 °C. En même temps, les pois ont été soumis à une fermentation avec des bactéries lactiques. Les pois ont été soumis à une fermentation en présence d'environ $10^8$ ufc de bactéries lactiques par ml de composition aqueuse comprenant des pois. La fermentation a été effectuée jusqu'à obtention d'un pH des pois de 4,4. Pendant la fermentation, la phase aqueuse dans la cuve de fermentation a été recyclée à environ 20 $m^3$/h. Les pois ont été fermentés pendant une durée de 480 min. À la fin de la fermentation, les pois avaient absorbé une quantité d'eau égale à environ leur masse initiale avant d'être fermentés et avaient une teneur en matière sèche d'environ 43 % (en poids). Après fermentation, les pois ont été retirés de la solution aqueuse. Les pois ont été ensuite placés dans un tambour rotatif perforé et lavés pour éliminer les impuretés solubles restantes. Après nettoyage, les pois ont été soumis à un broyage par voie humide. Pendant le broyage, de l'eau potable supplémentaire a été ajoutée de sorte que la composition finale avait une teneur en matière sèche d'environ 25 % (en poids). Au cours de l'étape de broyage, le pH a été ajusté à environ 8 en ajoutant de l'hydroxyde de sodium.

Après broyage et ajustement du pH, la pâte de pois broyés a été soumise à une décantation par centrifugation. Le culot contenant des fibres et de l'amidon avait une teneur en matière sèche d'environ 45 % (en poids). La fraction enrichie en fibres a été diluée à une matière sèche de 20% (en poids).

La fraction enrichie en fibres a ensuite été tamisée afin d'éliminer une partie de l'amidon. L'extrait de pois comprenant des fibres avait une teneur en matière sèche d'environ 10 % (en poids).

Ensuite, l'extrait de pois comprenant des fibres a été passé dans une presse afin de retirer une partie de l'eau du milieu. L'extrait de pois comprenant des fibres a ensuite une teneur en matière sèche d'environ 30 % (en poids).

Enfin, l'extrait de pois comprenant des fibres, pressé, a été séché sur un sécheur Flash avec recirculation du produit séché. La température d'entrée du sécheur Flash était d'environ 200 °C et la température de sortie était d'environ 75 °C.

**Exemple 2** : **Comparaison entre un broyage du pois hydraté et un broyage du pois sec**

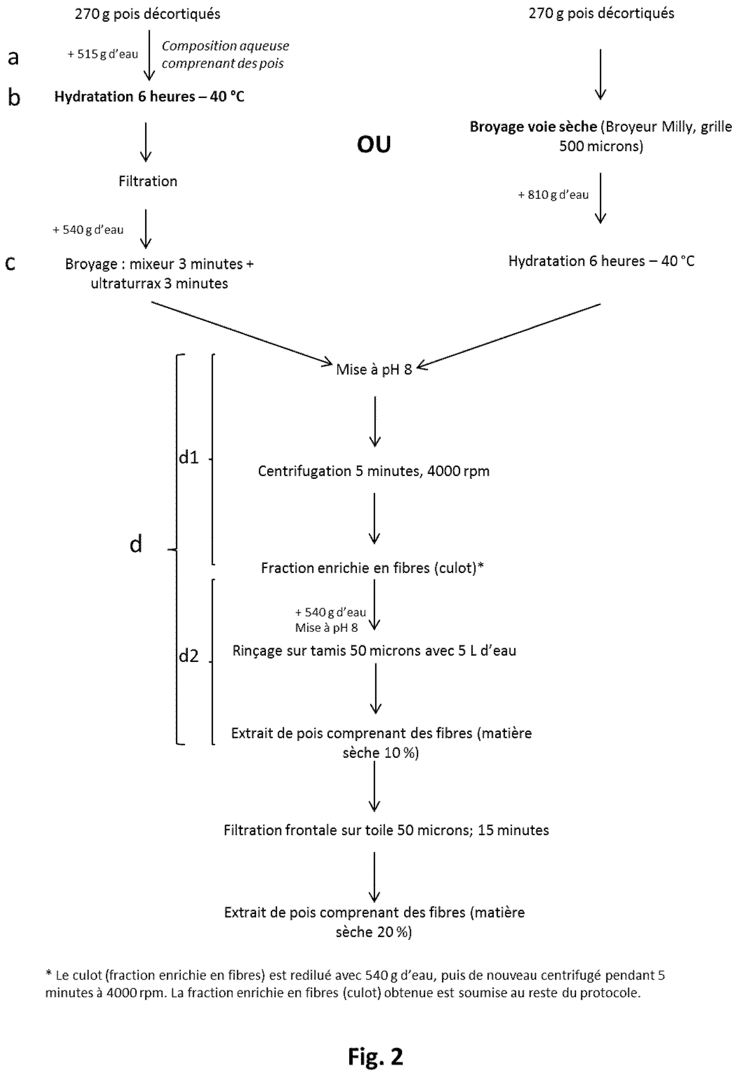

Le protocole est décrit dans la figure 2. Différents paramètres ont également été mesurés et sont présentés dans le tableau 2 ci-dessous. (MS : matière sèche)

**Tableau 2**

| Extrait de pois | Broyage du pois hydraté | Broyage du pois sec |
|---|---|---|
| MS(%) | 23,3 | 28,8 |
| Amidon (% MS) | 54,5 | 47,6 |
| Cendres (% MS) | 1,4 | 1,3 |
| RE (g/g MS) | 13,0 | 8,1 |

**Exemple 3 : Effet du temps d'hydratation sur le pois décortiqué à 40°C.**

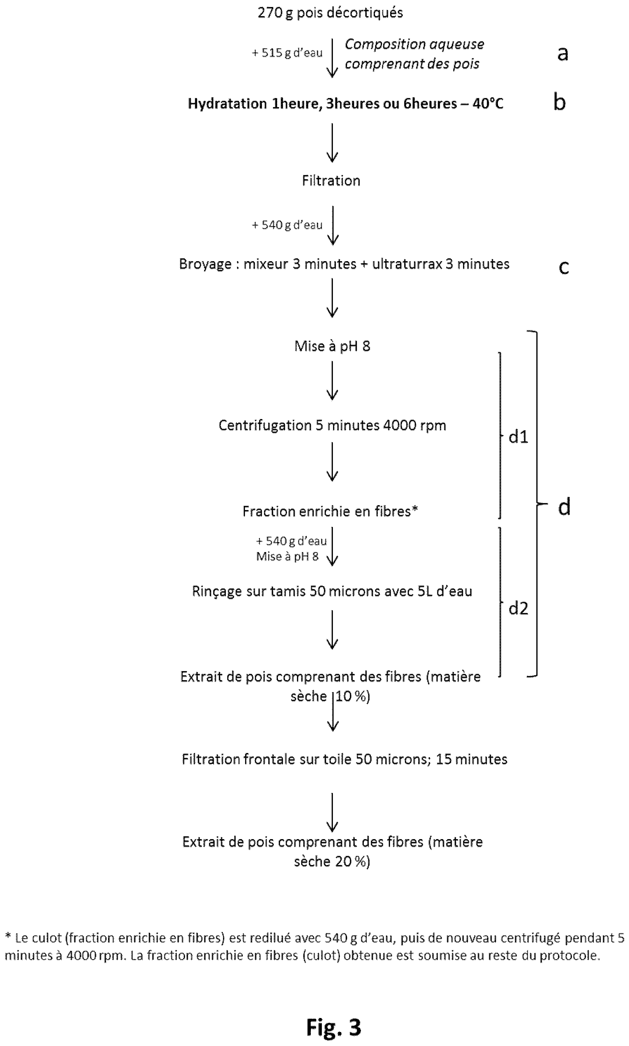

Le protocole suivi est décrit dans la figure 3. Les résultats sont présentés dans le tableau 3 ci-dessous.

**Tableau 3**

| Temps d'hydratation | MS (%) | Amidon (%/MS) | Cendres (% MS) | RE (g/g MS) |
|---|---|---|---|---|
| 1 heure | 23,2 | 44,8 | 1,6 | 12,5 |
| 3 heures | 23,0 | 51,4 | 1,3 | 12,5 |
| 6 heures | 23,3 | 55,7 | 1,3 | 13,0 |

**Exemple 4 : Effet du décorticage avant ou après hydratation pendant 6 heures à 20 °C**

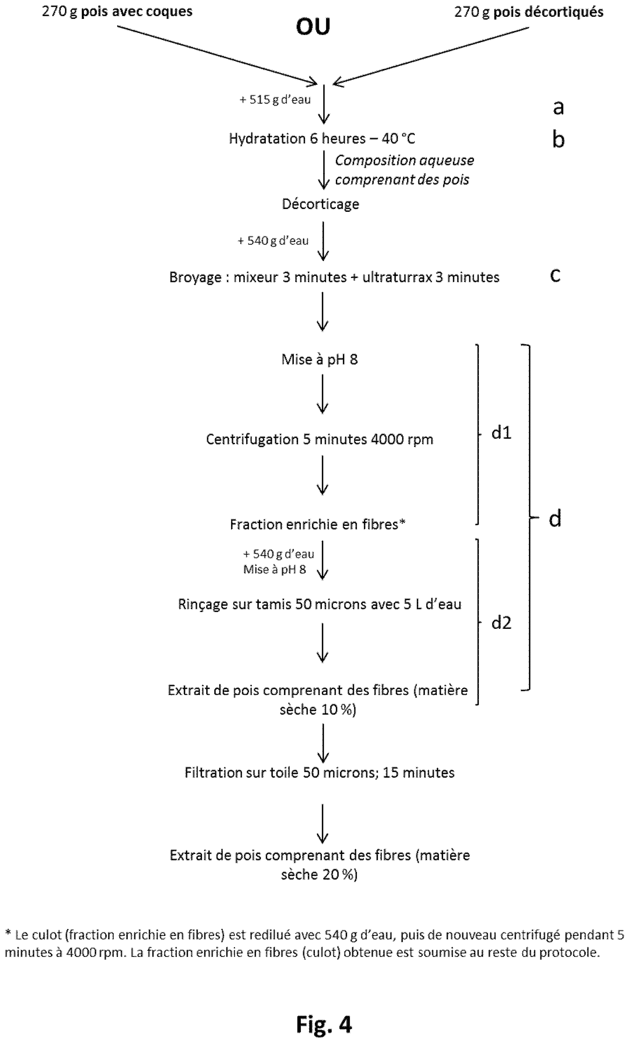

Le protocole suivi est décrit dans la figure 4. Les résultats sont présentés dans le tableau 4 ci-dessous.

Tableau 4

| | MS (%) | Amidon (%/MS) | Cendres (% MS) | RE (g/g MS) |
|---|---|---|---|---|
| Pois décortiqués | 22,0 | 54,9 | 1,4 | 12,9 |
| Pois non décortiqués | 23,3 | 53,5 | 1,5 | 12,4 |

**Exemple 5 : Produits alimentaires comprenant un extrait de pois comprenant des fibres selon l'invention**

L'inclusion de l'extrait de pois comprenant des fibres dans divers produits alimentaires a été évaluée.

1. Recette Burger

L'extrait de pois comprenant des fibres obtenu dans l'exemple 1 a été utilisé dans cet exemple. Les ingrédients de la recette sont décrits dans le tableau 5 ci-dessous. Une recette de contrôle a été effectuée, c'est-à-dire sans l'extrait de pois comprenant des fibres.

Tableau 5

| Ingrédients | Burger de bœuf (g) | Contrôle (g) |
|---|---|---|
| Viande de boeuf (15% graisse) | 80,20 | 82,00 |
| Eau | 15,00 | 15,00 |
| Extrait de pois comprenant des fibres | 1,80 | |
| Sel | 1,50 | 1,50 |
| Dextrose/Lactose | 0,80 | 0,80 |
| Assaisonnement | 0,65 | 0,65 |
| Acide ascorbique | 0,05 | 0,05 |
| TOTAL | 100 | 100 |

La viande fraîche a été conservée dans une chambre froide à 0 °C pendant 12 heures avant utilisation. La viande a ensuite été pré-broyée avec une plaque ayant des pores de 5 mm de diamètre. L'eau a ensuite été versée sur la viande dans le mélangeur à pales. L'extrait de pois comprenant des fibres a été ajouté à la viande hachée dans le mélangeur à pales et mélangé pendant 3 minutes. Les autres ingrédients ont ensuite été ajoutés et l'ensemble a été mélangé pendant 6 minutes puis refroidi à 2 °C. La préparation a ensuite été broyée pendant 5 minutes. Des burgers de pois désirés ont été formés et congelés à -18 °C. Les burgers ont ensuite été grillés à 125 °C pendant 4 minutes de chaque côté.

Avec l'utilisation de l'extrait de pois comprenant des fibres, lors de la préparation, la pâte était non collante, facile à manipuler et à façonner. Les burgers ont eu un bon comportement à la cuisson avec des pertes à la cuisson réduites. Le rétrécissement a été contrôlé pendant la cuisson. Les burgers cuits avaient une bonne texture et une sensation juteuse en bouche. La couleur et le goût de la viande ont été conservés.

Le tableau 6 présente les différentes caractéristiques des burgers avec et sans extrait de pois comprenant des fibres.

Tableau 6

| | Burger de boeuf comprenant l'extrait de pois comprenant des fibres | Contrôle |
|---|---|---|
| Rétrécissement en longueur | -16 % | -22 % |
| Rétrécissement en largeur | -15 % | -22 % |

(suite)

| | Burger de boeuf comprenant l'extrait de pois comprenant des fibres | Contrôle |
|---|---|---|
| **Perte totale à la cuisson** | -10,9 % | -22,2 % |
| **Texture après cuisson** | Bonne | Ferme |
| **Juteux après cuisson** | Bon | Sec |
| **Goût après cuisson** | Ok | Ok |

Les burgers ont été mesurés selon leur largeur (l1 et l2) et leur longueur (L1 et L2) avant (1) et après cuisson (2).

Le pourcentage de rétrécissement en longueur est égal à : ((L2-L1)/L1)*100

Le pourcentage de rétrécissement en largeur est égal à : ((l2-l1)/l1)*100

Les burgers ont été pesés avant (m1) et après cuisson (m2). La perte totale à la cuisson est égale à : ((m2-m1)/m1)*100.

La texture, le juteux et le goût après cuisson ont été analysés par analyse sensorielle suivant la norme V 09-001.

La texture a été définie comme étant la sensation de fermeté au cours de la mastication. Le juteux a été défini comme étant le relargage de jus pendant la mastication. Le goût a été défini comme étant une absence de goût inhabituel et inapproprié.

2. Recette Nuggets

L'extrait de pois comprenant des fibres obtenu dans l'exemple 1 a été utilisé dans cet exemple. Les ingrédients de la recette sont décrits dans le tableau 7 ci-dessous. Une recette de contrôle a été effectuée, c'est à dire sans extrait de pois comprenant des fibres.

**Tableau 7**

| Ingrédients | Nuggets de volailles (g) | Contrôle (g) |
|---|---|---|
| Blanc de poulet *(plaque 25 mm)* | 40,00 | 42,20 |
| Blanc de poulet *(plaque 4 mm)* | 10,00 | 10,00 |
| Cuisse de dinde *(plaque 4 mm)* | 15,00 | 15,00 |
| Peau de poulet | 5,00 | 5,00 |
| Eau glacée | 25,50 | 25,50 |
| Extrait de pois comprenant des fibres | 2,20 | |
| Sel | 1,20 | 1,20 |
| Dextrose | 0,50 | 0,50 |
| Tripolyphosphate de sodium *(E 451, 452)* | 0,35 | 0,35 |
| Assaisonnement *(poivre, ail, noix de muscade)* | 0,25 | 0,25 |
| TOTAL | 100 | 100 |

Tout d'abord la saumure a été préparée en dissolvant le phosphate et le sel dans l'eau glacée. Le tout a été mélangé jusqu'à solubilisation complète. Le dextrose et les assaisonnements ont ensuite été ajoutés. Les blancs de poulets (environ 4/5) ont été broyés à travers une plaque de 25 mm et le reste à travers une plaque de 4 mm. La cuisse de dinde a été broyée à travers une plaque de 4 mm. La viande a été chargée dans une baratte et l'extrait de pois comprenant des fibres et la saumure ont été ajoutés simultanément. La préparation a été barattée sous vide (-0,9 bar) pendant 20 minutes (20 tours par minute pendant 8 minutes (continu) et 2 minutes d'attente). L'ensemble a été réfrigéré à -2 °C. Les nuggets ont été formés et enrobés de chapelure puis frits pendant 45 secondes à 180 °C (pré-friture). Les nuggets ont ensuite été congelés et emballés. Ensuite les nuggets sont frits dans une friteuse (comprenant de l'huile végétale) à 180 °C pendant 6 minutes (friture complète).

Lors de la préparation, les nuggets ont un bon comportement à la cuisson avec des pertes à la cuisson réduites. La pâte a une excellente texture avant cuisson et est non collante, facile à manipuler et à façonner. Le produit est très stable après congélation / décongélation. En bouche, il a une texture juteuse. Il n'y a pas eu d'effet sur la couleur du produit et le goût de la volaille a été conservé.

Le tableau 8 présente les différentes caractéristiques des nuggets avec et sans extrait de pois comprenant des fibres.

**Tableau 8**

|  | Nuggets de volaille | Contrôle |
|---|---|---|
| **Dureté avant cuisson** | 380 | 236 |
| **Perte à la cuisson après pré-friture** | -2,4 % | -8,0 % |
| **Perte à la cuisson après friture complète** | -13,6 % | -29,3 % |
| **Total des pertes à la cuisson** | -15,7 % | -35,0 % |
| **Texture après cuisson** | Bon | Ok |
| **Juteux après cuisson** | Bon | Trop sec, du jus est perdu |
| **Goût après cuisson** | Ok | Ok |

Les nuggets ont été pesés avant (m1) et après cuisson (m2). La perte totale à la cuisson est égale : ((m2-m1)/m1)*100.

La texture, le juteux et le goût après cuisson ont été analysés par analyse sensorielle suivant la norme V 09-001.

La texture a été définie comme étant la sensation de fermeté au cours de la mastication. Le juteux a été défini comme étant le relargage de jus pendant la mastication. Le goût a été défini comme étant une absence de goût inhabituel et inapproprié.

**Exemple 6 : Produits alimentaires comprenant un extrait de pois comprenant des fibres selon l'invention, l'extrait ayant subi un deuxième broyage après séchage**

Les extraits de pois comprenant des fibres obtenu dans l'exemple 1 ont été utilisés dans cet exemple. L'extrait de pois comprenant des fibres a été broyé une deuxième fois avec un broyeur à broche à sec (d50 = 65 $\mu$m, d90 = 180 $\mu$m, la taille des particules a été mesurée par tamis par voie sèche), puis mélangé à une composition pour former une saumure. Les ingrédients de la saumure sont décrits dans le tableau 9 ci-dessous.

**Tableau 9**

| | Saumure comprenant l'extrait de pois comprenant des fibres, broyé une 2ème fois | Saumure comprenant l'extrait de pois comprenant des fibres |
|---|---|---|
| Eau | 88,95 % | 88,95 % |
| Phosphate de sodium | 1,73 % | 1,73 % |
| Sel de salaison | 5,76 % | 5,76 % |
| Dextrose | 1,39 % | 1,39 % |
| K-Carraghénane | 0,30 % | 0,30 % |
| Ascorbate de sodium | 0,13 % | 0,13 % |
| Extrait de pois comprenant des fibres | 1,73 % | 1,73 % |
| Total | 100 % | 100 % |

La saumure a été préparée en dispersant le phosphate de sodium dans de l'eau froide. Ensuite le sel nitrité puis le dextrose sont dissous. L'extrait de pois comprenant les fibres a été ajouté au mélange. Le k-carragghénane a été ensuite dispersé et l'ascorbate de sodium a été dissout.

La saumure a été injectée dans de la viande fraiche dégraissée (morceau de jambon d'environ 5 kg) jusqu'à ce que le rendement voulu de 40% soit atteint. L'injecteur utilisé est le_GUNTHER -aiguilles 54, 4mm.

La viande avec la saumure ont été ensuite massées pendant 15 minutes (6 rpm en continu). La viande a été placée dans un sac plastique et cuite dans de l'eau chaude à 82 °C (température intérieure 72°C). Ensuite la viande a été réfrigérée à 4 °C.

Le tableau 10 présente les différentes caractéristiques des viandes avec extrait de pois.

**Tableau 10**

| | Viande contenant l'extrait de pois comprenant des fibres, broyé une 2ème fois | Viande contenant l'extrait de pois comprenant des fibres |
|---|---|---|
| **Observations pendant la préparation de la saumure** | OK | OK |
| **Observation / filtre** | Pas de résidu | Gros gâteau à la surface du filtre |
| **Observations dans la machine** | OK | Arrêt |

**Exemple 7 : Comparaison de l'extrait de pois comprenant des fibres après séchage avec des extraits de pois de l'art antérieur**

Différents extraits de pois ont été testés et comparé avec les extraits de pois selon l'invention. Les résultats sont montrés au Tableau 11.

**Tableau 11**

| Caractéristiques | Extrait de pois comprenant des fibres | Extrait de pois comprenant des fibres | Extrait de pois comprenant des fibres | Extrait de pois comprenant des fibres ayant subi un 2ème broyage | Emfibre EF 150 | Pea fiber I50M |
|---|---|---|---|---|---|---|
| Fournisseur | Selon l'invention | Selon l'invention | Selon l'invention | Selon l'invention | Emsland | Roquette |
| Taux de fibres (%IMS) | | | | | | |
| Ratio fibres/ amidon | | | | | | |
| Couleur | blanche | blanche | Blanche | Blanche | jaunâtre | jaunâtre |
| Goût | neutre | neutre | Neutre | Neutre | neutre | neutre |
| D50 Taille particule | < 300 $\mu$m | < 300 $\mu$m | < 300 $\mu$m | < 100 $\mu$m | <300 $\mu$m | < 300 $\mu$m |
| Rétention en eau (g d'eau/g de matière sèche) | 12.4 | 16.6 | 13.5 | 9.6 | 10.3 | 5.3 |
| Rétention en huile (g d'huile/g de matière sèche) | 3.3 | | 3.6 | 2.1 | 2,1 | 1,6 |
| Force de gel après traitement thermique (g) | 497 | | 531 | 402 | 325 | 92 |
| Teneur en protéines % en poids par rapport à matière sèche | 4.00 | | 4.1 | 4.1 | 12.7 | 8.2 |
| Matière sèche % | 89,9 | 95,5 | 90,9 | 90,9 | 91,2 | 93,2 |

**Revendications**

1.   Un procédé de préparation d'un extrait de pois comprenant des fibres, le procédé comprenant les étapes suivantes :

(a) mettre en contact des pois décortiqués avec une solution aqueuse afin de former une composition aqueuse comprenant des pois ;
(b) laisser hydrater les pois dans ladite composition aqueuse pendant au moins 30 minutes et au plus 15 heures ;
(c) broyer lesdits pois pour obtenir de ce fait des pois broyés ; et
(d) fractionner lesdits pois broyés afin d'obtenir au moins un extrait de pois comprenant des fibres ;

caractérisé en que l'étape (a) précède l'étape (b), qui elle-même précède l'étape (c), qui elle-même précède l'étape (d) et en ce que l'extrait de pois comprenant des fibres a un ratio pondéral fibres/amidon d'au moins 30/70 et d'au plus 85/15, préférentiellement un ratio pondéral fibres/amidon d'au moins 40/60 et d'au plus 70/30.

2.   Le procédé selon la revendication 1, dans lequel au moins une étape de séchage (e) dudit extrait de pois comprenant des fibres est mise en oeuvre.

3. Le procédé selon la revendication 1 ou 2, dans lequel le fractionnement desdits pois broyés dans l'étape (d) comprend la soumission desdits pois broyés à au moins une étape de séparation par centrifugation et/ou filtration.

4. Le procédé selon l'une quelconque des revendications 1 à 3, dans lequel l'étape de fractionnement (d) peut être divisée en au moins deux étapes de fractionnement (d1) et (d2).

5. Le procédé selon l'une quelconque des revendications 1 à 4, dans lequel l'étape de fractionnement (d) comprend au moins une étape (d1), dans lequel le fractionnement desdits pois broyés dans l'étape (d1) comprend la soumission desdits pois broyés à au moins une étape de décantation, de filtration et/ou de séparation par centrifugation afin d'obtenir une fraction enrichie en fibres.

6. Le procédé selon l'une quelconque des revendications 1 à 5, dans lequel l'étape de fractionnement (d) peut être divisée en au moins deux étapes de fractionnement (d1) et (d2), et l'étape de fractionnement (d2) comprend au moins une étape de filtration de la fraction enrichie en fibres obtenue à l'étape (d1), plus particulièrement une étape de tamisage afin d'obtenir un extrait de pois comprenant des fibres.

7. Le procédé selon l'une quelconque des revendications 1 à 6, dans lequel, pendant l'étape (b), les pois dans ladite composition aqueuse sont hydratés pendant au moins 1 heure, de préférence pendant au moins 1,5 heure, de préférence pendant au moins 3 heures, encore plus préférentiellement pendant au moins 6 heures.

8. Le procédé selon l'une quelconque des revendications 1 à 7, dans lequel, pendant l'étape (b), les pois dans ladite composition aqueuse sont hydratés à une température d'au moins 0 °C.

9. Le procédé selon l'une quelconque des revendications 1 à 8, dans lequel ladite composition aqueuse comprenant les pois durant l'étape (b) est soumise à au moins une fermentation.

10. Le procédé selon l'une quelconque des revendications 1 à 9, dans lequel l'étape de fractionnement (d) comprend au moins une étape (d1), dans lequel le fractionnement desdits pois broyés dans l'étape (d1) comprend l'ajustement du pH des pois broyés à un pH d'au moins 6.

11. Extrait de pois comprenant des fibres **caractérisé en ce qu'**il comprend :

- un ratio pondéral fibres/amidon d'au moins 30/70 et d'au plus 85/15, plus préférentiellement un ratio pondéral fibres/amidon d'au moins 40/60 et d'au plus 70/30 ;
- une quantité de fibres d'au moins 35 % et d'au plus 80 % en poids sur la base de la matière sèche dosées par la méthode AOAC-985.29, plus préférentiellement une quantité de fibres comprise entre 40 % et 55 % en poids sur la base de la matière sèche dosées par la méthode AOAC-985.29 ;
- une teneur en matière sèche d'au moins 80 % et d'au plus 95 % sur la base du poids total de l'extrait, plus préférentiellement une teneur en matière sèche comprise entre 86 et 94% sur la base du poids total de l'extrait, encore plus préférentiellement comprise entre 88 et 92% sur la base du poids total de l'extrait ; et
- un taux de protéines inférieur à 5% sur la base de la matière sèche ; et
- qu'il a une rétention en eau d'au moins 9 g d'eau/g de matière sèche et d'au plus 19 g d'eau/g de matière sèche; plus préférentiellement une rétention en eau comprise entre 9 g d'eau/g de matière sèche et 17 g d'eau/g de matière sèche.

12. L'extrait de pois comprenant des fibres selon la revendication 11 pouvant être obtenu à l'aide du procédé selon l'une quelconque des revendications 1 à 10.

13. Extrait de pois comprenant des fibres selon la revendication 12, **caractérisé en ce qu'**il comprend :

- une taille de particule D50 < 400 $\mu$m, mesuré par granulométrie par voie sèche ;
- une taille de particule D90 < 700 $\mu$m, mesuré par granulométrie par voie sèche ; et qu'il a
- une rétention en huile d'au moins 2,5 g d'huile/g de matière sèche et d'au plus 5,0 g d'huile/g de matière sèche, plus préférentiellement une rétention en huile comprise entre 2,8 g d'huile/g de matière sèche et 3.2 g d'huile/g de matière sèche ; et
- une force de gel après traitement thermique d'au moins 400 g et d'au plus 900 g, plus préférentiellement une force de gel après traitement thermique comprise entre 400 et 600 g.

**14.** Extrait broyé de pois comprenant des fibres **caractérisé en ce qu'**il comprend :

- une taille de particule D50 < 200 $\mu$m, mesuré par granulométrie par voie sèche ;
- une taille de particule D90 < 400 $\mu$m, mesuré par granulométrie par voie sèche ;
- un ratio pondéral fibres/amidon d'au moins 30/70 et d'au plus 85/15, plus préférentiellement un ratio pondéral fibres/amidon d'au moins 40/60 et d'au plus 70/30 ;
- une quantité de fibres d'au moins 35 % et d'au plus 80 % en poids sur la base de la matière sèche dosées par la méthode AOAC-985.29, plus préférentiellement une quantité de fibres comprise entre 40 % et 65 % en poids sur la base de la matière sèche dosées par la méthode AOAC-985.29 ;
- une teneur en matière sèche d'au moins 80 % et d'au plus 95 % sur la base du poids total de l'extrait ; plus préférentiellement une teneur en matière sèche comprise entre 86 et 94% sur la base du poids total de l'extrait, encore plus préférentiellement entre 88 et 92% sur la base du poids total de l'extrait ; et
- qu'il a une rétention en eau d'au moins 7 g d'eau/g de matière sèche et d'au plus 17 g d'eau/g de matière sèche,.

**15.** Extrait broyé de pois comprenant des fibres selon la revendication 14, **caractérisé en ce qu'**il comprend

- un taux de protéines inférieur à 5% sur la base de la matière sèche ;
- et qu'il a une rétention en huile d'au moins 1,5 g d'huile/g de matière sèche et d'au plus 5,0 g d'huile/g de matière sèche, plus préférentiellement une rétention en huile comprise entre 2,0 g d'huile/g de matière sèche et 3.0 g d'huile/g de matière sèche ; et
- une force de gel après traitement thermique d'au moins 250 g et d'au plus 900 g, plus préférentiellement une force de gel après traitement thermique comprise entre 300 et 400 g.

**16.** Une composition comestible, de préférence un produit destiné à l'alimentation humaine ou animale, comprenant l'extrait de pois comprenant des fibres selon l'une quelconques des revendications 11 à 15.

**17.** L'utilisation de l'extrait de pois comprenant des fibres selon l'une quelconques des revendications 11 à 15 dans des produits destinés à l'alimentation humaine ou animale, de préférence, des produits restructurés à base de viande, de volailles, de poissons ou végétales, des saucisses et saucissons de porc et/ou de poulet et/ou poisson, des pâtés à base de viande/poisson ou végétariens.

**Patentansprüche**

**1.** Verfahren zur Herstellung eines faserhaltigen Erbsenextrakts, wobei das Verfahren die folgenden Schritte umfasst:

(a) das In-Kontakt-Bringen von geschälten Erbsen mit einer wässrigen Lösung, wodurch eine wässrige Zusammensetzung gebildet wird, die Erbsen umfasst;
(b) das Hydratisierenlassen der Erbsen in der wässrigen Zusammensetzung für mindestens 30 Minuten und höchstens 15 Stunden;
(c) das Zerkleinern der Erbsen, um dadurch zerkleinerte Erbsen zu erhalten; und
(d) das Fraktionieren der zerkleinerten Erbsen, wodurch mindestens ein faserhaltiger Erbsenextrakt erhalten wird;

**dadurch gekennzeichnet, dass** Schritt (a) Schritt (b) vorausgeht, der selbst Schritt (c) vorausgeht, der selbst Schritt (d) vorausgeht, und dass der faserhaltige Erbsenextrakt ein Gewichtsverhältnis von Fasern zu Stärke von mindestens 30:70 und höchstens 85:15, vorzugsweise ein Gewichtsverhältnis von Fasern zu Stärke von mindestens 40:60 und höchstens 70:30, aufweist.

**2.** Verfahren nach Anspruch 1, wobei mindestens ein Schritt des Trocknens (e) des faserhaltigen Erbsenextrakts durchgeführt wird.

**3.** Verfahren nach Anspruch 1 oder 2, wobei die Fraktionierung der zerkleinerten Erbsen in Schritt (d) das Unterziehen mindestens eines Schritts zur Trennung durch Zentrifugieren und/oder Filtrieren auf die zerkleinerten Erbsen umfasst.

4. Verfahren nach einem der Ansprüche 1 bis 3, wobei der Fraktionierungsschritt (d) in mindestens zwei Fraktionierungsschritte (d1) und (d2) aufgeteilt werden kann.

5. Verfahren nach einem der Ansprüche 1 bis 4, wobei der Fraktionierungsschritt (d) mindestens einen Schritt (d1) umfasst, bei dem die Fraktionierung der zerkleinerten Erbsen in Schritt (d1) das Unterziehen mindestens eines Schrittes einer Dekantierung, Filtration und/oder Trennung durch Zentrifugation auf die zerkleinerten Erbsen umfasst, wodurch eine mit Fasern angereicherte Fraktion erhalten wird.

6. Verfahren nach einem der Ansprüche 1 bis 5, wobei der Fraktionierungsschritt (d) in mindestens zwei Fraktionierungsschritte (d1) und (d2) aufgeteilt werden kann und der Fraktionierungsschritt (d2) mindestens einen Schritt der Filtration der in Schritt (d1) erhaltenen, mit Fasern angereicherten Fraktion, spezieller einen Siebschritt, umfasst, wodurch ein faserhaltiger Erbsenextrakt erhalten wird.

7. Verfahren nach einem der Ansprüche 1 bis 6, wobei in Schritt (b) die Erbsen in der wässrigen Zusammensetzung für mindestens 1 Stunde, vorzugsweise für mindestens 1,5 Stunden, vorzugsweise für mindestens 3 Stunden, noch stärker bevorzugt für mindestens 6 Stunden, hydratisiert werden.

8. Verfahren nach einem der Ansprüche 1 bis 7, wobei in Schritt (b) die Erbsen in der wässrigen Zusammensetzung bei einer Temperatur von mindestens 0 °C hydratisiert werden.

9. Verfahren nach einem der Ansprüche 1 bis 8, wobei die die Erbsen umfassende wässrige Zusammensetzung in Schritt (b) mindestens einer Fermentation unterzogen wird.

10. Verfahren nach einem der Ansprüche 1 bis 9, wobei der Fraktionierungsschritt (d) mindestens einen Schritt (d1) umfasst, bei dem die Fraktionierung der zerkleinerten Erbsen in Schritt (d1) die Einstellung des pH-Wertes der zerkleinerten Erbsen auf einen pH-Wert von mindestens 6 umfasst.

11. Faserhaltiger Erbsenextrakt, **dadurch gekennzeichnet, dass** er Folgendes umfasst:

    - ein Gewichtsverhältnis von Fasern zu Stärke von mindestens 30:70 und höchstens 85:15, stärker bevorzugt ein Gewichtsverhältnis von Fasern zu Stärke von mindestens 40:60 und höchstens 70:30;
    - eine Fasermenge von mindestens 35 Gew.-% und höchstens 80 Gew.-%, bezogen auf die Trockensubstanz, bestimmt mit der Methode AOAC-985.29, stärker bevorzugt eine Fasermenge zwischen 40 Gew.-% und 55 Gew.-%, bezogen auf die Trockensubstanz, bestimmt mit der Methode AOAC-985.29;
    - einen Trockensubstanzgehalt von mindestens 80 % und höchstens 95 %, bezogen auf das Gesamtgewicht des Extrakts, stärker bevorzugt einen Trockensubstanzgehalt zwischen 86 und 94 %, bezogen auf das Gesamtgewicht des Extrakts, noch stärker bevorzugt zwischen 88 und 92 %, bezogen auf das Gesamtgewicht des Extrakts; und
    - einen Proteingehalt von weniger als 5 %, bezogen auf die Trockensubstanz; und
    - der eine Wasserretention von mindestens 9 g Wasser/g Trockensubstanz und höchstens 19 g Wasser/g Trockensubstanz; stärker bevorzugt eine Wasserretention zwischen 9 g Wasser/g Trockensubstanz und 17 g Wasser/g Trockensubstanz aufweist.

12. Faserhaltiger Erbsenextrakt nach Anspruch 11, der mittels des Verfahrens nach einem der Ansprüche 1 bis 10 erhältlich ist.

13. Faserhaltiger Erbsenextrakt nach Anspruch 12, **dadurch gekennzeichnet, dass** er Folgendes umfasst:

    - eine Partikelgröße D50 < 400 pm, gemessen mittels Korngrößenbestimmung im trockenen Zustand;
    - eine Partikelgröße D90 < 700 pm, gemessen mittels Korngrößenbestimmung im trockenen Zustand; und dass er
    - eine Ölretention von mindestens 2,5 g Ölig Trockensubstanz und höchstens 5,0 g Ölig Trockensubstanz; stärker bevorzugt eine Ölretention zwischen 2,8 g Ölig Trockensubstanz und 3,2 g Ölig Trockensubstanz; und
    - nach einer thermischen Behandlung eine Gelfestigkeit von mindestens 400 g und höchstens 900 g, stärker bevorzugt nach einer thermischen Behandlung eine Gelfestigkeit zwischen 400 und 600 g aufweist.

14. Zerkleinerter faserhaltiger Erbsenextrakt, **dadurch gekennzeichnet, dass** er Folgendes umfasst:

    - eine Partikelgröße D50 < 200 pm, gemessen mittels Korngrößenbestimmung im trockenen Zustand;

- eine Partikelgröße D90 < 400 pm, gemessen mittels Korngrößenbestimmung im trockenen Zustand;
- ein Gewichtsverhältnis von Fasern zu Stärke von mindestens 30:70 und höchstens 85:15, stärker bevorzugt ein Gewichtsverhältnis von Fasern zu Stärke von mindestens 40:60 und höchstens 70:30;
- eine Fasermenge von mindestens 35 Gew.-% und höchstens 80 Gew.-%, bezogen auf die Trockensubstanz, bestimmt mit der Methode AOAC-985.29, stärker bevorzugt eine Fasermenge zwischen 40 Gew.-% und 65 Gew.-%, bezogen auf die Trockensubstanz, bestimmt mit der Methode AOAC-985.29;
- einen Trockensubstanzgehalt von mindestens 80 % und höchstens 95 %, bezogen auf das Gesamtgewicht des Extrakts, stärker bevorzugt einen Trockensubstanzgehalt zwischen 86 und 94 %, bezogen auf das Gesamtgewicht des Extrakts, noch stärker bevorzugt zwischen 88 und 92 %, bezogen auf das Gesamtgewicht des Extrakts; und
- dass er eine Wasserretention von mindestens 7 g Wasser/g Trockensubstanz und höchstens 17 g Wasser/g Trockensubstanz aufweist.

15. Zerkleinerter faserhaltiger Erbsenextrakt nach Anspruch 14, **dadurch gekennzeichnet, dass** er Folgendes umfasst:

- einen Proteingehalt von weniger als 5 %, bezogen auf die Trockensubstanz;
- und dass er eine Ölretention von mindestens 1,5 g Ölig Trockensubstanz und höchstens 5,0 g Ölig Trockensubstanz; stärker bevorzugt eine Ölretention zwischen 2,0 g Ölig Trockensubstanz und 3,0 g Ölig Trockensubstanz; und
- nach einer thermischen Behandlung eine Gelfestigkeit von mindestens 250 g und höchstens 900 g, stärker bevorzugt nach einer thermischen Behandlung eine Gelfestigkeit zwischen 300 und 400 g aufweist.

16. Essbare Zusammensetzung, vorzugsweise ein Produkt zur menschlichen oder tierischen Ernährung, die den faserhaltigen Erbsenextrakt nach einem der Ansprüche 11 bis 15 umfasst.

17. Verwendung eines faserhaltigen Erbsenextrakts nach einem der Ansprüche 11 bis 15 in Produkten zur menschlichen oder tierischen Ernährung, vorzugsweise restrukturierten Produkten auf der Grundlage von Fleisch, Geflügel, Fischen oder Pflanzen, Schweine- und/oder Hühner- und/oder Fischrohwürstchen und -Dauerwürsten, Pasteten auf der Grundlage von Fleisch/Fisch oder vegetarischen Pasteten.


**Claims**

1. Process for preparing a pea extract comprising fibres, the process comprising the following steps:

(a) bringing shelled peas into contact with an aqueous solution in order to form an aqueous composition comprising peas;
(b) leaving the peas to hydrate in said aqueous composition for at least 30 minutes and at most 15 hours;
(c) grinding said peas in order to as a result obtain ground peas; and
(d) fractionating said ground peas in order to obtain at least one pea extract comprising fibres;

**characterized in that** step (a) precedes step (b), which itself precedes step (c), which itself precedes step (d) and **in that** the pea extract comprising fibres has a fibres/starch weight ratio of at least 30/70 and of at most 85/15, preferentially a fibres/starch weight ratio of at least 40/60 and of at most 70/30.

2. Process according to Claim 1, in which at least one step of drying (e) said pea extract comprising fibres is carried out.

3. Process according to Claim 1 or 2, in which the fractionation of said ground peas in step (d) comprises subjecting said ground peas to at least one step of separation by centrifugation and/or filtration.

4. Process according to any one of Claims 1 to 3, in which the fractionation step (d) can be divided into at least two fractionation steps (d1) and (d2).

5. Process according to any one of Claims 1 to 4, in which the fractionation step (d) comprises at least one step (d1), in which the fractionation of said ground peas in step (d1) comprises subjecting said ground peas to at least one step of decantation, of filtration and/or of separation by centrifugation in order to obtain a fibre-enriched fraction.

6. Process according to any one of Claims 1 to 5, in which the fractionation step (d) can be divided into at least two fractionation steps (d1) and (d2), and the fractionation step (d2) comprises at least one step of filtration of the fibre-enriched fraction obtained in step (d1), more particularly a sieving step in order to obtain a pea extract comprising fibres.

7. Process according to any one of Claims 1 to 6, in which, during step (b), the peas in said aqueous composition are hydrated for at least 1 hour, preferably for at least 1.5 hours, preferably for at least 3 hours, even more preferentially for at least 6 hours.

8. Process according to any one of Claims 1 to 7, in which, during step (b), the peas in said aqueous composition are hydrated at a temperature of at least 0°C.

9. Process according to any one of Claims 1 to 8, in which said aqueous composition comprising the peas during step (b) is subjected to at least one fermentation.

10. Process according to any one of Claims 1 to 9, in which the fractionation step (d) comprises at least one step (d1), in which the fractionation of said ground peas in step (d1) comprises the adjustment of the pH of the ground peas to a pH of at least 6.

11. Pea extract comprising fibres, **characterized in that** it comprises:

- a fibres/starch weight ratio of at least 30/70 and of at most 85/15, more preferentially a fibres/starch weight ratio of at least 40/60 and of at most 70/30;
- an amount of fibres of at least 35% and of at most 80% by weight on the basis of the dry matter, assayed by the AOAC-985.29 method, more preferentially an amount of fibres of between 40% and 55% by weight on the basis of the dry matter, assayed by the AOAC-985.29 method;
- a dry matter content of at least 80% and of at most 95% on the basis of the total weight of the extract, more preferentially a dry matter content of between 86% and 94% on the basis of the total weight of the extract, even more preferentially of between 88% and 92% on the basis of the total weight of the extract; and
- a protein content of less than 5% on the basis of the dry matter; and
- **in that** it has a water retention of at least 9 g of water/g of dry matter and of at most 19 g of water/g of dry matter; more preferentially a water retention of between 9 g of water/g of dry matter and 17 g of water/g of dry matter.

12. Pea extract comprising fibres according to Claim 11 that can be obtained by means of the process according to any one of Claims 1 to 10.

13. Pea extract comprising fibres according to Claim 12, **characterized in that** it comprises:

- a particle size D50 < 400 pm, measured by dry particle size analysis;
- a particle size D90 < 700 pm, measured by dry particle size analysis; and **in that** it has
- an oil retention of at least 2.5 g of oil/g of dry matter and of at most 5.0 g of oil/g of dry matter, more preferentially an oil retention of between 2.8 g of oil/g of dry matter and 3.2 g of oil/g of dry matter; and
- a gel strength after heat treatment of at least 400 g and of at most 900 g, more preferentially a gel strength after heat treatment of between 400 and 600 g.

14. Ground pea extract comprising fibres, **characterized in that** it comprises:

- a particle size D50 < 200 pm, measured by dry particle size analysis;
- a particle size D90 < 400 pm, measured by dry particle size analysis;
- a fibres/starch weight ratio of at least 30/70 and of at most 85/15, more preferentially a fibres/starch weight ratio of at least 40/60 and of at most 70/30;
- an amount of fibres of at least 35% and of at most 80% by weight on the basis of the dry matter, assayed by the AOAC-985.29 method, more preferentially an amount of fibres of between 40% and 65% by weight on the basis of the dry matter, assayed by the AOAC-985.29 method;
- a dry matter content of at least 80% and of at most 95% on the basis of the total weight of the extract; more preferentially a dry matter content of between 86% and 94% on the basis of the total weight of the extract, even more preferentially between 88% and 92% on the basis of the total weight of the extract; and
- **in that** it has a water retention of at least 7 g of water/g of dry matter and of at most 17 g of water/g of dry matter.

**15.** Ground pea extract comprising fibres according to Claim 14, **characterized in that** it comprises

- a protein content of less than 5% on the basis of the dry matter;
- and **in that** it has an oil retention of at least 1.5 g of oil/g of dry matter and of at most 5.0 g of oil/g of dry matter, more preferentially an oil retention of between 2.0 g of oil/g of dry matter and 3.0 g of oil/g of dry matter; and
- a gel strength after heat treatment of at least 250 g and of at most 900 g, more preferentially a gel strength after heat treatment of between 300 and 400 g.

**16.** Edible composition, preferably a product intended for human or animal nutrition, comprising the pea extract comprising fibres according to any one of Claims 11 to 15.

**17.** Use of the pea extract comprising fibres according to any one of Claims 11 to 15, in products intended for human or animal nutrition, preferably restructured products which are based on meat, poultry, fish or vegetable, pork and/or chicken and/or fish fresh sausages and dry-cured sausages, meat/fish-based or vegetarian pâtés.

**Fig. 1**

270 g pois décortiqués

270 g pois décortiqués

a  + 515 g d'eau | *Composition aqueuse comprenant des pois*

b  **Hydratation 6 heures – 40 °C**

**OU**

**Broyage voie sèche** (Broyeur Milly, grille 500 microns)

Filtration

+ 810 g d'eau

+ 540 g d'eau

c  Broyage : mixeur 3 minutes + ultraturrax 3 minutes

Hydratation 6 heures – 40 °C

Mise à pH 8

d

d1  Centrifugation 5 minutes, 4000 rpm

Fraction enrichie en fibres (culot)*

d2  + 540 g d'eau
Mise à pH 8

Rinçage sur tamis 50 microns avec 5 L d'eau

Extrait de pois comprenant des fibres (matière sèche 10 %)

Filtration frontale sur toile 50 microns; 15 minutes

Extrait de pois comprenant des fibres (matière sèche 20 %)

* Le culot (fraction enrichie en fibres) est redilué avec 540 g d'eau, puis de nouveau centrifugé pendant 5 minutes à 4000 rpm. La fraction enrichie en fibres (culot) obtenue est soumise au reste du protocole.

## Fig. 2

270 g pois décortiqués

+ 515 g d'eau | *Composition aqueuse* a
*comprenant des pois*

**Hydratation 1heure, 3heures ou 6heures – 40°C** b

Filtration

+ 540 g d'eau

Broyage : mixeur 3 minutes + ultraturrax 3 minutes c

Mise à pH 8

Centrifugation 5 minutes 4000 rpm d1

Fraction enrichie en fibres* d

+ 540 g d'eau
Mise à pH 8

Rinçage sur tamis 50 microns avec 5L d'eau d2

Extrait de pois comprenant des fibres (matière
sèche 10 %)

Filtration frontale sur toile 50 microns; 15 minutes

Extrait de pois comprenant des fibres (matière
sèche 20 %)

\* Le culot (fraction enrichie en fibres) est redilué avec 540 g d'eau, puis de nouveau centrifugé pendant 5 minutes à 4000 rpm. La fraction enrichie en fibres (culot) obtenue est soumise au reste du protocole.

## Fig. 3

270 g **pois avec coques**　　　**OU**　　　270 g **pois décortiqués**

+ 515 g d'eau

a

Hydratation 6 heures – 40 °C

b

*Composition aqueuse comprenant des pois*

Décorticage

+ 540 g d'eau

Broyage : mixeur 3 minutes + ultraturrax 3 minutes　　c

Mise à pH 8

Centrifugation 5 minutes 4000 rpm　　d1

Fraction enrichie en fibres*

d

+ 540 g d'eau
Mise à pH 8

Rinçage sur tamis 50 microns avec 5 L d'eau　　d2

Extrait de pois comprenant des fibres (matière sèche 10 %)

Filtration sur toile 50 microns; 15 minutes

Extrait de pois comprenant des fibres (matière sèche 20 %)

* Le culot (fraction enrichie en fibres) est redilué avec 540 g d'eau, puis de nouveau centrifugé pendant 5 minutes à 4000 rpm. La fraction enrichie en fibres (culot) obtenue est soumise au reste du protocole.

**Fig. 4**

EP 3 294 067 B1

## RÉFÉRENCES CITÉES DANS LA DESCRIPTION

**Documents brevets cités dans la description**

- EP 0251163 A2

**Littérature non-brevet citée dans la description**

- **GARNA H.** Kinetic of the hydrolysis of pectin galacturonic acid chains and quantification by ionic chromatography. *Food Chemistry,* 2006, vol. 96, 477-484

- Measurement of dietary fibre. *FIE Chromatography, 3 ; Ingrédients analysis,* 84-93